# NOUVEAU FASCICULE DE BREVET EUROPEEN

(11) **EP 2 916 652 B2**
(45) Date de publication et mention de la décision concernant l'opposition: **23.02.2022**
(45) Mention de la délivrance du brevet: 06.03.2019
(21) Numéro de dépôt: 13791775.3
(22) Date de dépôt: 07.11.2013
(51) Int. Cl.: A01N 25/22, A01N 25/04, C08L 5/04

(54) **UTILISATION DE SUSPENSIONS LIQUIDES DE POLYMÈRES**
VERWENDUNG FLÜSSIGER POLYMERSUSPENSIONEN
USE OF LIQUID POLYMER SUSPENSIONS

(30) Priorité: 08.11.2012 FR 1202998
(43) Date de publication de la demande: 16.09.2015
(73) Titulaire: RHODIA OPERATIONS, 93300 Aubervilliers (FR)
(72) Inventeur: BALASTRE, Marc, F-75020 Paris (FR); PINOT, Florent, F-92700 Colombes (FR)
(74) Mandataire: Cardon, Flavie
(86) Numéro de dépôt international: PCT/EP2013/073302
(87) Numéro de publication internationale: WO 2014/072429

(56) Documents cités:
- WO-A1-91/04660
- WO-A1-96/11230
- WO-A2-2004/028686
- JP-A- H1 112 073
- US-A- 3 258 326
- US-A- 4 381 947
- US-A- 4 883 536
- US-A- 5 489 638
- US-A- 5 888 484
- US-A1- 2006 018 968
- US-A1- 2007 135 312
- US-A1- 2007 142 519
- US-A1- 2011 054 042
- US-B1- 7 476 646
- A Srivastava ET AL: "Alginates: a review of compositional aspects for dental applications.", Trends in Biomaterials and Artificial Organs, 1 janvier 2012 (2012-01-01), XP55098202, Extrait de l'Internet: URL:http://www.thefreelibrary.com/_/print/ PrintArticle.aspx?id=304842702 [extrait le 2014-01-23]
- Anonymous: "Botany online: Cell Wall - Cell Walls of Algae", , 1 janvier 2004 (2004-01-01), XP055098294, Extrait de l'Internet: URL:http://www.biologie.uni-hamburg.de/b-o nline/e26/26d.htm [extrait le 2014-01-24]

## Description

La présente invention concerne le domaine de l'utilisation de suspensions aqueuses de polymères comme adjuvant extemporané d'une composition agricole destinée à être appliquée sur un champ.

Les polymères, en particulier les polysaccharides, tels que par exemple les galactomannanes, les polymères cellulosiques, l'amidon et leurs dérivés, ou encore les polymères synthétiques, sont des composés disponibles dans le commerce qui sont utiles dans de nombreuses applications, par exemple comme ingrédients dans des produits alimentaires, des compositions cosmétiques, des compositions agricoles ou encore dans des fluides de fracturation utilisés pour des applications en champs pétrolifères.

Dans un certain nombre d'applications, le polymère est mis en oeuvre sous la forme d'une poudre sèche qui est ajoutée à un milieu aqueux et solubilisée pour former une solution aqueuse visqueuse.

Pour d'autres applications, il est au contraire nécessaire de disperser le polymère, sans qu'il ne se solubilise dans un milieu liquide, et de maintenir une suspension homogène de ce polymère, capable de rester stable sur une large gamme de température et/ou pendant une certaine durée du stockage.

La présente invention se rapporte à l'utilisation de ce deuxième type de formulations, dans lesquelles un polymère est présent sous forme dispersée dans un milieu aqueux.

Par ailleurs, il est également avantageux de façon générale de préparer des suspensions aqueuses de polymères contenant de fortes concentrations en polymère dispersé, en particulier pour des raisons économiques (notamment pour réduire le poids des compositions et par conséquent leurs coûts de transports), la formulation concentrée étant ensuite diluée à la concentration souhaitée par l'utilisateur final.

Dans le domaine des compositions agricoles par exemple, on cherche généralement à obtenir des formulations concentrées en polymère sous forme dispersée qui soient homogènes, qui ne présentent sensiblement pas de séparation de phases (sédimentation, synérèse...) et qui soient coulables, de manière à permettre une dilution en poids aisée par l'exploitant agricole, et l'obtention d'un produit dilué où tous les composants sont correctement dispersés et en quantité adéquate.

Cette approche peut être néanmoins difficile à mettre en oeuvre en pratique. En effet, les formulations concentrées en polymère sous forme dispersée, par exemple les suspensions concentrées en polysaccharides sous forme dispersée, peuvent avoir tendance à développer une forte viscosité (résultant en particulier de l'hydratation partielle ou totale dudit polysaccharide) et à être par conséquent difficiles à manipuler.

Un des buts de l'invention est de fournir des suspensions aqueuses de polymères (en particulier des suspensions aqueuses_de polymères contenant de fortes concentrations en polymère dispersé) qui soient stables sur une large gamme de température (voir *tests CIPAC* (Collaborate International Pesticides Analytical Council) *des formulations agrochimiques effectués à 0°C pendant 1 semaine, température ambiante pendant 1 an et 54°C pendant 2 semaines))* et qui puissent être stockées durant des périodes relativement longues.

Dans le domaine des compositions agricoles par exemple, des polymères peuvent être ajoutés aux formulations à titre d'agents anti-dérive et/ou comme agents anti-rebond. En particulier, des agents de limitation de la dérive (polymères de hautes masses de type polyacrylamide, polyéthylèneglycol (PEG), polyvinylpyrolidone, polysaccharide, type guar, etc...) sont connus pour diminuer la quantité de fines gouttelettes générées par l'atomisation de la composition agricole. Ces polymères sont notamment utiles lorsque les compositions agricoles sont appliquées par pulvérisation. En effet, la pulvérisation de formulations aqueuses peut générer un nuage de pulvérisation où les très petites gouttelettes (< 150µm) sont entrainées par le vent et/ou évaporées et n'atteignent pas leurs cibles, ce phénomène étant appelé la dérive ou l'entrainement. La dérive représente une part importante du gaspillage inhérent aux applications par pulvérisation et présente une préoccupation en matière de santé publique et d'environnement.

L'utilisation de galactomannanes (notamment du guar ou de ses dérivés) dans les compositions agricoles (phytosanitaires ou fertilisants) est aussi connue pour augmenter en outre l'effet anti-rebond notamment sur les feuilles pour limiter les pertes lors de l'impact des gouttelettes.

Pour ces raisons, il y a donc un intérêt continu pour des suspensions aqueuses d'un polymère, en particulier des suspensions aqueuses de polymères contenant de fortes concentrations en polymère dispersé, qui soient faciles à manipuler, qui présentent une bonne stabilité au stockage, et qui se dispersent convenablement après dilution dans l'eau.

Par « facile à manipuler » ou « coulable », on entend désigner des compositions de viscosité convenable, par exemple supérieure à 300 cP et inférieure à 10000 cP mesurée à 20 tour/min et à 20°C selon le test normé CIPAC MT 192.

Par « bonne stabilité au stockage », on entend désigner des compositions qui restent homogènes (c'est-à-dire qui ne présentent sensiblement pas de séparation de phase (sédimentation, synérèse...)) dans le temps, en particulier qui restent sensiblement homogènes lorsqu'elles sont stockées pendant au moins une semaine à 0°C, ou pendant au moins 2 semaines à 54°C (Tests normés CIPAC MT 39.3 et MT 46.3).

Par « dispersion convenable » ou « bonne dispersion », on entend désigner une dispersion après dilution dans l'eau (eaux standards CIPAC A ou D) qui est homogène (c'est-à-dire qui ne présente sensiblement pas de séparation de phase (sédimentation, synérèse...)) dans le temps, en particulier qui reste sensiblement homogène lorsqu'elle est stockée pendant 30 minutes dans un bain d'eau thermostaté à 30°C, de préférence pendant 2 heures dans un bain d'eau thermostaté à 30°C et idéalement pendant 24 heures dans un bain d'eau thermostaté à 30°C (adaptation du test CIPAC MT180). Une telle dispersion doit notamment permettre d'assurer de bonnes propriétés d'usage du polymère dispersé. Par exemple, dans le domaine des compositions agricoles où le polymère dispersé serait un agent anti-rebond et/ou anti-dérive, une dispersion convenable est une dispersion permettant audit polymère de présenter effectivement des propriétés anti-rebond et/ou anti-dérive.

Par ailleurs, dans un certain nombre d'applications, les suspensions de polymères peuvent comprendre en outre un sel d'un cation monovalent.

En particulier, dans le domaine des compositions agricoles, les formulations peuvent contenir un sel d'un cation monovalent, en particulier un sel d'ammonium.

A titre illustratif, les compositions peuvent par exemple contenir du sulfate d'ammonium (AMS), ce sel étant souvent utilisé pour augmenter l'efficacité des agents herbicides, par exemple des glyphosates. L'AMS est notamment avantageux pour adoucir la dureté de l'eau. L'AMS est également avantageux en tant qu'engrais pour assurer la croissance végétative.

Cependant, la présence de sels peut être préjudiciable à la stabilité de la suspension aqueuse de polymères et/ou avoir un impact sur sa rhéologie et donc sa coulabilité et sa maniabilité par l'utilisateur.

En effet, les agents de mise en suspension et/ou de rhéologie utilisés de façon classique dans ce domaine (par exemple les gommes de xanthane, de Rhéozan ou de guar) pour réaliser des suspensions concentrées agrochimiques stables ne permettent pas de jouer ce rôle dans des milieux contenant une certaine concentration en sel d'un cation monovalent. En effet, la présence de tels sels, surtout en quantité importante, ne permet pas de stabiliser ces systèmes. Sans être lié par une quelconque théorie, on peut penser que les sels préviennent sans doute l'hydratation de ces polymères de mise en suspension et/ou de rhéologie, empêchant ces derniers d'être efficaces en tant que stabilisant rhéologique du concentré.

Pour ces raisons, il y a donc également un besoin pour des suspensions aqueuses d'un polymère, en particulier des suspensions aqueuses_de polymères contenant de fortes concentrations en polymère dispersé, contenant un sel d'un cation monovalent, qui soient faciles à manipuler, qui présentent une bonne stabilité au stockage, et qui se dispersent convenablement après dilution dans l'eau.

Etant donné que plus la concentration saline (notamment en sel d'un cation monovalent) est importante, plus il est difficile de fournir des suspensions homogènes et qui restent stables même après stockage, il existe également un besoin pour des suspensions aqueuses de polymères concentrées (c'est-à-dire contenant de fortes concentrations en polymère dispersé) contenant notamment une quantité importante de sels d'un cation monovalent, par exemple des teneurs en sel d'un cation monovalent supérieures à 20% en poids, par exemple supérieures à 30% en poids, par exemple supérieures à 32% en poids par rapport au poids total de la suspension.

On connait du document WO2011/028286 des compositions comportant à la fois du guar et du sulfate d'ammonium. Pour obtenir une bonne stabilité de la suspension lors du stockage, il a été nécessaire d'y ajouter un agent de suspension, dans ce cas particulier de la fumée de silice et, à titre de retardateur d'hydratation du guar, du sulfate d'ammonium. Malgré cela, les concentrations en sulfate d'ammonium des suspensions décrites dans ce document ont un impact très important sur la stabilité et la viscosité de la formulation et restent relativement faibles, de l'ordre de 26%.

On connait également de EP 660 999-B1 l'effet du guar comme agent anti-entrainement en pulvérisation aqueuse, notamment dans des conditions prolongées de pulvérisation (comportant un cisaillement important). Les compositions décrites dans ce document ne contiennent pas de sel d'ammonium.

Il a été découvert que l'ajout d'un polysaccharide de type alginate, et notamment un alginate de sodium ou un alginate d'ammonium, permet de maintenir en suspension des polymères dans une solution saline (i.e. dans une solution contenant un sel d'un cation monovalent), en particulier lorsque la concentration du sel est importante, et ce de façon stable dans le temps.

En particulier, il a été découvert que l'ajout d'un polysaccharide de type alginate de sodium ou alginate d'ammonium à une solution aqueuse saline (i.e. dans une solution contenant un sel d'un cation monovalent), permet de maintenir en suspension de manière homogène, dans des conditions de stockage prolongée, des polymères (notamment des particules solides de polysaccharides de type guar et dérivés, des dérivés de cellulose, ou encore des polymères synthétiques), ces polymères étant peu ou pas hydratés dans un tel milieu.

Ainsi, la présente invention a pour objet, selon un premier de ses aspects, une utilisation d'une suspension d'un polymère telle que définie en revendication 1. La suspension de l'utilisation selon l'invention comporte de 0,01 à 5% en poids d'alginate par rapport au poids total de la suspension ; elle comporte entre 10 à 80% en poids dudit sel d'un cation monovalent par rapport au poids total de la suspension, et le ratio massique entre ledit sel d'un cation monovalent et ledit polymère est compris entre 800 et 0,5.

L'invention permet également de fournir l'utilisation d'une suspension stable comportant à la fois des particules de principes actifs et de polymères en suspension (par exemple polysaccharide de type guar et dérivés, des dérivés de cellulose, ou encore des polymères synthétiques).

La suspension peut être une composition adjuvante extemporanée pour compositions phytosanitaires ou de fertilisants (généralement appelée composition « tank-mix »).

Ainsi, la présente invention concerne l'utilisation d'une suspension telle que définie précédemment comme adjuvant extemporané d'une composition agricole destinée à être appliquée sur un champ.

### Milieu aqueux

Au sens de la présente invention, le terme « milieu aqueux » désigne un milieu qui est en phase liquide à une température de 25°C et à une pression d'une atmosphère.

Selon l'invention, le milieu est un milieu liquide aqueux.

Au sens de la présente invention, le terme « milieu aqueux » désigne un milieu liquide monophasé qui contient plus qu'une trace d'eau, typiquement, par rapport à 100 parties en poids du milieu aqueux, le milieu liquide aqueux contient plus de 0,1 partie en poids (pbw) d'eau.

Plus généralement, le milieu aqueux comprend sur la base de 100 parties en poids du milieu aqueux, une quantité d'eau d'environ 5 parties en poids, encore plus particulièrement une quantité d'eau supérieure à 10 parties en poids.

Le milieu aqueux peut, optionnellement, comprendre en outre d'autres composants miscibles ou solubles à l'eau dissout dans le milieu aqueux.

Au sens de la présente invention, le terme « miscible à l'eau » signifie miscible en toute proportion avec l'eau.

A titre d'exemple, les liquides organiques miscibles à l'eau incluent les alcools en (C₁-C₆) tels que le méthanol, l'éthanol, le propanol, et les polyols en (C₁-C₆) tels que le glycérol, l'éthylène glycol, le propylène glycol et le diéthylène glycol.

Selon un mode de réalisation, le milieu liquide aqueux est constitué majoritairement d'eau, voire est l'eau.

### Alginate

Selon un mode de réalisation, l'alginate peut être choisi parmi les alginates de sodium et d'ammonium. Il peut notamment s'agir de l'alginate de sodium.

De tels alginates sont notamment disponibles auprès de la société Faravelli, par exemple sous les références Sodium Alginate Food Grade E401 ou 990.079, auprès de la société Biochemica Applichem, par exemple sous la référence A3249, auprès de la société Dupont/Danisco sous la référence Grinsted Alginate FD125.

### Sel d'un cation monovalent

Selon l'invention, le sel d'un cation monovalent est choisi parmi les sels contenant les éléments N, P, K.

Selon un mode de réalisation, le sel d'un cation monovalent peut être choisi parmi :
- les sels d'ammonium, tel que le sulfate d'ammonium, le chlorure d'ammonium, le nitrate d'ammonium, l'acétate d'ammonium, le formate d'ammonium, l'oxalate d'ammonium, le carbonate d'ammonium, le thiosulfate d'ammonium, le phosphate d'ammonium, le thiocyanate d'ammonium, les polyphosphates d'ammonium, tel que le metaphosphate d'ammonium, l'hexametaphosphate d'ammonium, le propionate d'ammonium, le dihydrogènophosphate d'ammonium, ou leurs mélanges;
- les sels de potassium, tel que le pyrophosphate de tetrapotassium, le phosphate de potassium, les polyphosphates de potassium, tel que le tripolyphosphate de potassium, le chlorure de potassium, l'iodure de potassium, le sulfate de potassium, ou leurs mélanges;
- les sels de sodium, tel que le carbonate de sodium, le citrate de sodium, ou leurs mélanges; et
- leurs mélanges.

Le sel d'un cation monovalent peut être, en particulier, choisi parmi les composés suivants :sulfate d'ammonium, polyphosphate d'ammonium, proproniate d'ammonium, nitrate d'ammonium, phosphate d'ammonium, dihydrogénophosphate d'ammonium, hexametaphosphate d'ammonium, pyrophosphate de tétrapotassium, phosphate de potassium, carbonate de sodium, sulfate de potassium et leurs mélanges.

Selon un mode de réalisation, le sel d'un cation monovalent est un sel d'ammonium, de préférence le sulfate d'ammonium.

Le sel d'un cation monovalent présent dans la composition visée par l'utilisation de l'invention, par exemple tel que le sulfate d'ammonium, peut permettre d'augmenter l'efficacité des agents herbicides (par exemple des glyphosates) notamment en contribuant à adoucir la dureté de l'eau.

Le sel d'un cation monovalent présent dans la composition de l'invention, par exemple tel que le sulfate d'ammonium, peut être également avantageux en tant qu'engrais pour assurer la croissance végétative.

### Polymère

Dans le cadre de la présente invention, le polymère mis en suspension dans les compositions de l'invention peut être choisi parmi les polysaccharides, par exemple choisi parmi les galactomannanes, tel que les guars, incluant les dérivés de guar tel que l'hydroxypropyl guar, le guar carboxyméthyl hydroxypropyl, les xanthanes, les polyfructoses tel que le levan, les amidons, incluant les dérivés d'amidon, tel que l'amylopectine et les cellulose, incluant les dérivés de cellulose, tel que methyl cellulose, ethyl cellulose, la carboxyméthyl cellulose, le carboxmethyl hydroxyethyl cellulose, l'hydroxyethyl cellulose, l'acetate de cellulose, le hydroxybutyl méthyl cellulose, l'hydroxypropyl cellulose, l'hydroxypropyl méthyl cellulose, cellulose acetate butyrate, et cellulose acetate propionate, l'acacia, l'agar, la carrageenan, le dammar, le dextrane, la dextrine, la gélatine, la gomme benzoin, la résine jalap, la gomme de karaya, le varech, la gomme de caroube, la maltodextrine, olibanum, la pectine, l'alginate de propylèneglycol, la gomme de sandaraque, de sodium carboxyméthyl dextran, la gomme tragacanth, le polyacylamide, la polyvinylpyrolidone et leurs mélanges.

Selon un mode de réalisation, ce polymère peut être notamment choisi parmi le polyacrylamide ; la polyvinylpyrrolidone ; les polysaccharides, par exemple choisi parmi les galactomannanes, tel que les guars, incluant les dérivés de guar, les polyfructoses tel que le levan, les amidons, incluant les dérivés d'amidon, tel que l'amylopectine et les celluloses, incluant les dérivés de cellulose, tel que la méthyl cellulose, l'éthyl cellulose, la carboxyméthyl cellulose, l'hydroxyéthyl cellulose, l'acétate de cellulose, la cellulose acétate butyrate, la cellulose acétate propionate, et leur mélanges.

Le polymère peut notamment être un agent anti-rebond et/ou anti-dérive.

Selon un mode de réalisation particulier, le polymère peut être un galactomannane, notamment choisi parmi les galactommananes modifiés, incluant les polymères dérivés du guar, tels que guar carboxyméthyl, guar carboxyméthylhydroxypropyl, guar hydroxyalkyl (incluant guar hydroxyethyl, guar hydroxypropyl, guar hydroxybutyle) cationique, guar hydroxyalkyle (incluant guar hydroxyethyl, guar hydroxypropyl, guar hydroxybutyle) neutre, guar carboxyalkyle (incluant guar carboxyméthyl, guar carboxylpropyl, guar carboxybutyl), les dérivés du guaran hydroxyéthylés, hydroxypropylés et carboxyméthylés, les dérivés du carubin hydroxethylés et carboxyméthylés et les dérivés du gomme cassia hydroxypropylés et carboxyméthylés.

Selon un mode de réalisation de la présente invention, le polymère peut être un polysaccharide galactomannane non-dérivé, plus généralement une gomme de guar non-dérivé.

Plus généralement, le polysaccharide peut être un polysaccharide galactomannane dérivé qui est substitué sur l'un ou plusieurs sites du polysaccharide par un groupe substituant qui est choisi indépendamment pour chaque site dans le groupe constitué de groupes substituants cationiques, non ioniques, et anioniques.

Selon un mode de réalisation, le polymère peut être un dérivé de polysaccharide galactomannane, plus généralement le polymère peut être un guar dérivé.

Ainsi, selon un mode de réalisation, le polymère peut être un galactomannane, par exemple un guar, incluant les dérivés de guar. Il peut notamment être choisi parmi le guar et ses dérivés, en particulier le guar neutre ou natif, ses dérivés hydroxyproxylés et/ou cationiques.

A titre d'exemple de guars dérivés, on peut notamment citer guar hydroxypropyl triméthylammonium, guar hydroxypropyl lauryldiméthylammonium, guar hydroxypropyl stearyldimethylammonium, guar hydroxypropyl, guar carboxyméthyl, guar avec des groupes hydroxypropyle et de hydroxypropyle triméthylammonium, guar avec des groupes carboxyméthyle hydroxypropyl et leurs mélanges.

A titre d'exemple de guars convenant à l'invention, on peut notamment citer les composés commercialisés sous les références Jaguar HP-8, AgRHO DR2000, AgRHO DR2010, Jaguar C14S, Jaguar C17, Jaguar Excel, Jaguar HP-105, Jaguar HP-120, Jaguar 308NB et Jaguar C162 par la société Solvay (Rhodia).

Selon un autre mode de réalisation, le polymère peut être une cellulose ou un de ses dérivés. A titre d'exemple, on peut citer l'hydroxyethyl cellulose commercialisée sous la référence Natrosol type 250 HR par la société Ashland.

Selon un autre mode de réalisation, le polymère peut être un polyacylamide (homopolymère ou copolymère). A titre d'exemple, on peut citer le Polytex 363 commercialisé par la société Exacto Inc. ou encore le Cgel 100 commercialisé par la société SNF.

Selon un autre mode de réalisation, le polymère peut être un polyvinylpyrolidone (homopolymère ou copolymère).

La suspension visée par l'utilisation selon l'invention comporte de 0,01 à 5% en poids d'alginate par rapport au poids total de la suspension, de préférence de 0,05 à 2,5% en poids, et de manière encore préférée de 0,1 à 1,5% en poids, par exemple au moins 0,5% en poids.

La suspension comporte entre 10 à 80% en poids de sel d'un cation monovalent par rapport au poids total de la suspension, de préférence de 20 à 60% en poids, et de manière encore préférée de 30 à 45% en poids.

Selon un mode de réalisation, la teneur en sel d'un cation monovalent peut être supérieure ou égale à 31% en poids par rapport au poids total de suspension, par exemple supérieure ou égale à 33% en poids, par exemple supérieure ou égale à 35% en poids, par exemple comprise entre 31 et 40% en poids, par exemple entre 33 et 40% en poids, et par exemple entre 35 et 40% en poids.

La quantité de polymères, notamment sous la forme de particules solides, que la suspension peut contenir est fonction de la quantité de sel d'un cation monovalent. Le ratio massique entre le sel d'un cation monovalent et le polymère, notamment sous la forme de particules solides, est compris entre 800 et 0,5, de préférence entre 200 et 2, de manière encore préférée entre 100 et 4 et de manière encore plus préférée entre 30 et 7.

Selon un mode de réalisation, la suspension visée par l'utilisation selon l'invention peut comprendre :
- au moins 30% en poids, par rapport au poids total de la suspension, d'un sel d'un cation monovalent, par exemple d'un sel d'ammonium, de préférence du sulfate d'ammonium,
- au moins 1% en poids, par rapport au poids total de la suspension, du polymère,
- de 0,5 à 2% en poids, par rapport au poids total de la suspension, de l'alginate.

Selon un mode de réalisation, la suspension peut comprendre :
- au moins 31% en poids, par rapport au poids total de la suspension, par exemple de 33 à 40% en poids, par exemple de 35 à 40% en poids, d'un sel d'un cation monovalent, par exemple d'un sel d'ammonium, de préférence du sulfate d'ammonium,
- au moins 1,5% en poids, par exemple au moins 2% en poids, par rapport au poids total de la suspension, du polymère,
- de 0,5 à 1,5% en poids, par rapport au poids total de la suspension, de l'alginate.

Selon un mode de réalisation, la suspension peut comprendre :
- de 33 à 40% en poids par rapport au poids total de la suspension, par exemple de 35 à 40% en poids, d'un sel d'ammonium, de préférence du sulfate d'ammonium,
- au moins 1,5% en poids, par exemple au moins 2% en poids, par rapport au poids total de la suspension, du polymère, de préférence d'une cellulose ou d'un de ses dérivés,
- de 0,5 à 1,5% en poids, par rapport au poids total de la suspension, de l'alginate, de préférence de l'alginate de sodium.

Selon un mode de réalisation, la suspension peut comprendre :
- de 33 à 40% en poids par rapport au poids total de la suspension, par exemple de 35 à 40% en poids, d'un sel d'ammonium, de préférence du sulfate d'ammonium,
- au moins 1,5% en poids, par exemple au moins 2% en poids, par rapport au poids total de la suspension, du polymère, de préférence d'un galactomannane ou d'un de ses dérivés,
- de 0,5 à 1,5% en poids, par rapport au poids total de la suspension, de l'alginate, de préférence de l'alginate de sodium.

Selon un mode de réalisation, la suspension peut comprendre :
- de 33 à 40% en poids par rapport au poids total de la suspension, par exemple de 35 à 40% en poids, d'un sel d'ammonium, de préférence du sulfate d'ammonium,
- au moins 1,5% en poids, par exemple au moins 2% en poids, par rapport au poids total de la suspension, du polymère, de préférence d'un polyacrylamide (homopolymère ou copolymère),
- de 0,5 à 1,5% en poids, par rapport au poids total de la suspension, de l'alginate, de préférence de l'alginate de sodium.

Selon un mode de réalisation, la suspension peut comprendre :
- de 33 à 40% en poids par rapport au poids total de la suspension, par exemple de 35 à 40% en poids, d'un sel d'ammonium, de préférence du sulfate d'ammonium,
- au moins 1,5% en poids, par exemple au moins 2% en poids, par rapport au poids total de la suspension, du polymère, de préférence d'une polyvinylpyrrolidone (homopolymère ou copolymère),
- de 0,5 à 1,5% en poids, par rapport au poids total de la suspension, de l'alginate, de préférence de l'alginate de sodium.

La suspension visée par l'utilisation selon l'invention peut encore avantageusement comporter l'un ou l'autre additif tel que des conservateurs, des agents anti-mousse, des humectants, des tensioactifs...

Elle peut également comporter en outre des fertilisants et/ou des engrais, tel que par exemple de l'urée et/ou des oligoéléments ou micronutriments (tels que par exemple Zn, Mn, Cu, Fe, Co).

Selon un mode de réalisation, la suspension visée par l'utilisation de l'invention peut comprendre moins de 10% en poids, par rapport au poids total de la suspension, de fumée de silice, de préférence moins de 5% en poids, par exemple moins de 2% en poids, par exemple moins de 1% en poids, par exemple moins de 0,5% en poids. En particulier, elle peut être substantiellement dépourvue de fumée de silice.

Selon un mode de réalisation, la suspension visée par l'utilisation de l'invention peut comprendre moins de 10% en poids, par rapport au poids total de la suspension, de gomme de xanthane, de préférence moins de 5% en poids, par exemple moins de 2% en poids, par exemple moins de 1% en poids, par exemple moins de 0,5% en poids. En particulier, elle peut être substantiellement dépourvue de gomme de xanthane.

Selon un mode de réalisation, le pH de la suspension de l'invention peut être compris entre 4 et 10, par exemple entre 5 et 9.

### Tensioactifs

Selon un mode de réalisation, la suspension visée par l'utilisation selon l'invention peut comporter en outre un ou plusieurs tensioactifs.

Par "tensioactif", on entend désigner au sens de l'invention un composé capable d'abaisser la tension superficielle de l'eau, et plus généralement composé choisi parmi l'une des cinq catégories suivantes : agents tensioactifs cationiques, anioniques, amphotères, zwittérioniques, et non ioniques, ainsi que leurs mélanges.

Selon un mode de réalisation particulier, la suspension visée par l'utilisation de la présente invention comporte un **tensioactif cationique.**

Les tensioactifs cationiques appropriés sont connus dans l'art antérieur et comprennent, par exemple, les sels d'amines, comme amine éthoxylé de suif, cocoalkylamine et oleylamine, composés d'ammonium quaternaire tels que le bromure de cétyl triméthyl ammonium, myristique bromure de triméthyl ammonium, stéarique chlorure de dimethyl benzyl ammonium , le lauryl / myristryl triméthyl ammonium, le méthosulfate, le méthosulfate de stéaryl octyldimonium, dihydrogéné méthosulfate palmoylethyl de hydroxyethylmonium, le chlorure de benzylimidonium isostéaryle, le cocoyl benzyl hydroxyéthyl imidazolinium chlorure, le cocoyl hydroxyethylimidazolinium, et leurs mélanges.

Selon un autre mode de réalisation particulier, la suspension visée par l'utilisation de la présente invention comporte un **tensioactif anionique.**

Les tensioactifs anioniques appropriés sont connus dans l'art antérieur et comprennent, par exemple, l'ammonium lauryl sulfate, l'ammonium laureth sulfate, la triéthylamine lauryl sulfate, triéthylamine laureth sulfate, lauryl sulfate de triéthanolamine, la triéthanolamine laureth sulfate, monoethanolamine lauryl sulfate, monoethanolamine laureth sulfate, di-lauryl sulfate , diéthanolamine laureth sulfate, laurique sulfate de sodium monoglycéride, le laurylsulfate de sodium, laureth sulfate de sodium, lauryl sulfate de potassium, laureth sulfate de potassium, le sodium lauryl sarcosinate de sodium, le lauroyl sarcosinate de lauryl sarcosine, cocoyl sarcosine, le sulfate d'ammonium cocoyle, le sulfate d'ammonium de lauroyle, cocoyle de sodium le sulfate, le sulfate de sodium de lauroyle, le sulfate de potassium cocoyl, le laurylsulfate de potassium, le lauryl sulfate de triéthanolamine, triéthanolamine lauryl sulfate, monoéthanolamine cocoyl sulfate, monoéthanolamine lauryl sulfate, le sodium tridécyl benzène sulfonate, le dodécylbenzènesulfonate de sodium, et leurs mélanges.

Selon un autre mode de réalisation particulier, la suspension visée par l'utilisation de la présente invention comporte un **tensioactif amphotère.**

Les tensioactifs amphotères appropriés sont connus dans l'art antérieur, et comprennent les tensioactifs largement décrits comme des dérivés d'amines secondaires et tertiaires aliphatiques, dans lesquels le radical aliphatique peut être linéaire ou ramifié et dans laquelle l'un des substituants aliphatiques contient d'environ 8 à environ 18 atomes de carbone et un autre contient un groupe anionique hydrosolubilisant tel que carboxyle, sulfonate, sulfate, phosphate ou phosphonate. Selon un autre mode de réalisation particulier, l'agent tensioactif amphotère comprend au moins un composé choisi parmi cocoamphoacetate, cocoamphodiacetate lauroamphoacétate et lauroamphodiacétate.

Selon un autre mode de réalisation particulier, la suspension visée par l'utilisation de la présente invention comporte un **tensioactif zwitterionique.**

Les tensioactifs zwitterioniques appropriés sont connus dans l'art antérieur et comprennent, par exemple, les agents de surface largement décrits comme des dérivés d'ammonium quaternaire aliphatiques, de phosphonium et de sulfonium, dans lesquels les radicaux aliphatiques peuvent être à chaîne droite ou ramifiée, et dans laquelle l'un des aliphatiques substituants contient d'environ 8 à environ 18 atomes de carbone et un autre contient un groupe anionique tel que carboxylique, sulfonate, sulfate, phosphate ou phosphonate.

Des exemples spécifiques d'agents tensioactifs zwitterioniques appropriés comprennent les bétaïnes d'alkyle, tels que la bétaïne carboxyméthyl cocodiméthyle, lauryl bétaïne carboxyméthylcellulose de diméthyle, le lauryl diméthyl bétaïne alpha-carboxyéthyle, cétylique bétaïne carboxyméthyl diméthyle, lauryle bis-(2 - hydroxy-éthyl) bétaïne de carboxyméthylcellulose, de stéaryle bis-(2-hydroxy-propyl)-carboxyméthyl bétaïne, oléyle diméthyl-gamma-carboxypropyle bétaïne, lauryle et de bis-(2-hydroxypropyl) alpha-carboxyéthyle bétaïne, les alkyle amidopropyl bétaïnes, les sultaïnes et d'alkyle, tels que la bétaïne cocodiméthyle sulfopropyle, méthyle stearyldi sulfopropyl bétaïne, la lauryl bétaïne sulfoéthyle de diméthyle, le lauryl-bis-(2-hydroxy-éthyl) bétaïne de sulfopropyle, et sultaines alkylamidopropylhydroxy.

Selon un autre mode de réalisation particulier, la suspension visée par l'utilisation de la présente invention comporte un **tensioactif non ionique.**

Les tensioactifs non ioniques appropriés sont connus dans l'art antérieur et comprennent, par exemple, les glucosides d'alkyle à longue chaîne ayant des groupes alkyle contenant environ 8 atomes de carbone à environ 22 atomes de carbone, monoéthanolamides d'acide gras de coco comme cocamide MEA, diéthanolamides d'acides gras de noix de coco, les alcoxylates d'alcool, et leurs mélanges.

Selon un mode de réalisation préférentiel, la suspension visée par l'utilisation de la présente invention comporte un mélange de deux ou plusieurs tensioactifs choisis parmi les tensioactifs cationiques, les tensioactifs anioniques, les tensioactifs amphotères, les tensioactifs zwittérioniques, les tensioactifs non ioniques, et leurs mélanges.

Particulièrement, selon un mode de réalisation de la présente invention, le tensioactif employé dans la suspension visée par l'utilisation selon l'invention peut être choisi parmi les composés suivants :
(i) les alkylbétaïnes et les alkyl (amidoalkyl) bétaïnes,
(ii) les amines ou étheramines, comprenant au moins un radical hydrocarboné contenant de 2 à 24 atomes de carbone, éventuellement polyalcoxylés,
(iii) les formes acides ou non de mono ou di-esters de phosphate, éventuellement polyalcoxylés,
(iv) alkylmonoglycosides ou alkylpolyglycosides, et/ou
(v) les alcools, comprenant au moins un radical hydrocarboné contenant de 2 à 24 atomes de carbone, éventuellement polyalcoxylés.

Par exemple, le composé (i) peut être choisi parmi des formules suivantes:

R¹R²R²N⁺-CH₂COO- (I)

R¹R³HN⁺-CH₂-CH₂COO⁻ (II)

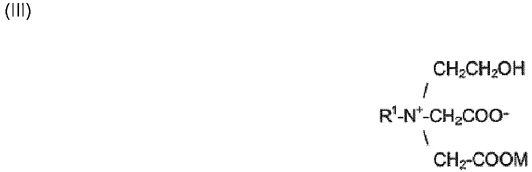

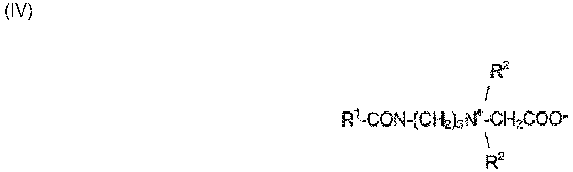

dans lesquelles :
R¹ représente un groupe alkyle linéaire ou ramifié contenant 3 à 30 atomes de carbone, de préférence de 3 à 20 atomes de carbone tels que le propyle, dodécyle, hexadécyle, tetrahexadecyl, d'octyle, ou leur mélanges, decylpolyglycoside, ou leurs mélanges.

Selon un mode de réalisation encore plus avantageux, le tensioactif employé dans la suspension visée par l'utilisation selon l'invention peut être choisi parmi les composés suivants :
(i) les alkylbétaïnes et les alkyl (amidoalkyl) bétaïnes,
(ii) les formes acides ou non de mono ou di-esters de phosphate, éventuellement polyalcoxylés, et
(iii) les alcools comprenant au moins un radical hydrocarboné contenant de 2 à 24 atomes de carbone éthoxylés.

### Utilisations

La suspension peut être utilisée en tant qu'adjuvant extemporané d'une composition agricole diluée destinée à être appliquée sur un champ.

Au sens de la présente invention, une composition agricole est une composition comprenant au moins un principe actif agricole, notamment choisi parmi les herbicides, les fongicides, les insecticides, les acaricides, les nématicides et/ou un fertilisant et/ou un produit d'engrais.

A ce titre la suspension peut être introduite dans un récipient, typiquement un réservoir ou une citerne de manière à y être diluée avec de l'eau et avec éventuellement d'autres ingrédients, notamment un produit actif agricole ou une formulation comprenant un tel produit. La dilution peut typiquement être de 1 part de dispersion pour 50 à 500 parts d'eau. Elle est typiquement opérée par l'exploitant agricole. Selon un mode de réalisation, on dilue d'abord la suspension en la versant dans l'eau, puis on ajoute le produit actif ou la formulation le comprenant.

La composition diluée (comprenant l'eau de dilution, la dispersion, et éventuellement le produit actif) est ensuite répandue sur le champ à traiter.

Ainsi on peut mettre en oeuvre un procédé d'application d'une composition agricole sur un champ, comprenant:
- une étape de mélange dans un réservoir de la suspension visée par l'utilisation selon la présente invention, d'eau et d'au moins un produit agricole, le cas échéant sous forme d'une composition agricole concentrée, de manière à obtenir une composition agricole diluée,
- une étape d'application sur le champ de la composition agricole diluée. L'application peut être effectuée à l'aide de tout dispositif adapté, notamment des dispositifs de pulvérisations et/ou de jets. Les dispositifs peuvent par exemple être placés au sol, placés sur des véhicules terrestres comme des tracteurs, ou sur des véhicules aériens comme des avions ou des hélicoptères. La quantité de composition diluée appliquée peut typiquement être de 10 à 2000 L/Ha, par exemple de 50 à 200 L/Ha. Selon le taux de dilution, la quantité de polymère hydrosoluble dans la dispersion, et les doses d'application, on peut typiquement appliquer de 9 à 1800 g/Ha, par exemple de 45 à 180 g/Ha de polymère hydrosoluble.

A titre illustratif, la composition agricole peut notamment comprendre :
- à titre des **actifs herbicides** :Acetochlor, Acibenzolar, Acibenzolar-5-méthyl, Acifluorfen, Acifluorfen-sodium, Aclonifen, alachlore, Allidochlor, Alloxydinn, Alloxydinn-sodium, Ametryn, Amicarbazone, amidochlor, Amidosulfuron, Aminocyclopyrachlor, Aminopyralid, Amitrole, Ammonium sulfamat, Ancymidol, anilofos, Asulam, atrazine, azafenidin, Azimsulfuron, Aziprotryn, beflubutamid, bénazoline, bénazoline-éthyl, Bencarbazone, Benfluralin, benfurésate, Bensulide, Bensulfuron, Bensulfuron-méthyl, de bentazone, Benzfendizone, Benzobicyclon , Benzofenap, Benzofluor, benzoylprop, bicyclopyrone, bifénox, Bispyribac, Bispyribac-sodium, Bromacil, bromobutide, Bromofenoxim, bromoxynil, Bromuron, Buminafos, Busoxinone, Butachlor, Butafenacil, butamifos, Butenachlor, butraline, Butroxydim, Butylate, Cafenstrole, carbétamide, Carfentrazone , carfentrazone-éthyl, Chlomethoxyfen, chloramben, Chlorazifop, Chlorazifop-butyle, chlorbromuron, chlorbufam, Chlorfenac, Chlorfenac-sodium, Chlorfenprop, chlorflurénol, chlorflurénol-méthyl, Chloridazon, Chlorimuron, Chlorimuron-éthyl, Chlormequat-chlorure, Chlornitrofen, Chlorophthalim, Chlorthal -dimethyl, Chlorotoluron, Chlorsulfuron, cinidon, cinidon-éthyl, cinméthyline, Cinosulfuron, Clethodim (C10), Clodinafop, Clodinafop-propargyl, Clofencet, Clomazone, Clomeprop, Cloprop, Clopyralid (C1), Cloransulam, cloransulame-méthyle, cumyluron, Cyanamide, Cyanazine, cyclanilide, cycloate, Cyclosulfamuron, Cycloxydime (C11), Cycluron, Cyhalofop, Cyhalofop-butyle, Cyperquat, Cyprazine, Cyprazole, le 2,4-D, 2,4-DB, Dalapon, Daminozide, Dazomet, n-Decanol, Desmedipham, Desmetryn, Detosyl-pyrazolate (DTP), diallate, dicamba, Dichlobenil, Dichlorprop, Dichlorprop-P, Diclofop, Diclofop-méthyl, Diclofop-P-méthyle, diclosulam, Diethatyl, Diethatyl-éthyl, Difenoxuron, Difenzoquat, Diflufenican, Diflufenzopyr , Diflufenzopyr-sodium, diméfuron, dikégulac-sodium, diméfuron, dimépipérate, diméthachlore (C2), Dimethametryn, Diméthénamide, Diméthénamide-P, Diméthipin, Dimetrasulfuron, dinitramine, Dinoseb, Dinoterbe, diphénamide, Dipropetryn, Diquat, Diquat-dibromide, Dithiopyr, Le diuron, le DNOC, Eglinazine-éthyl, Endothal, EPTC, esprocarb, éthalfluraline, Éthametsulfuron, Éthametsulfuron-méthyl, éthéphon, éthidimuron, Ethiozin, Éthofumesate, Ethoxyfen, Ethoxyfen-éthyl, éthoxysulfuron, monium).
- à titre des **actifs fongicides** :les nitrilo oxime fongicides tels que le cymoxanil, fongicides imidazoles tels que le bénomyl, carbendazime, ou thiophanateméthyl; fongicides triazoles comme triadimefon; fongicides sulfénamide, comme le captane, fongicides dithiocarbamate comme manèbe, mancozèbe, ou thirame; fongicides aromatiques chloronated comme chloroneb; fongicides aniline dichloro comme l'iprodione, les fongicides à base de strobilurine comme krésoxim-méthyl, trifloxystrobine ou l'azoxystrobine, du chlorothalonil, fongicides de sel de cuivre tels que l'oxychlorure de cuivre, le soufre; phénylamides et acylamino fongicides comme métalaxyl ou mefenoxam ;
- à titre des **actifs insecticides** :les carbamates, tels que le méthomyl, le carbaryl, carbofuran, ou l'aldicarbe; organo insecticides de thiophosphate comme EPN, isofenphos, isoxathion, chlorpyrifos, ou chlorméphos; insecticides organophosphorés comme le terbufos, monocrotophos, ou terachlorvinphos; insecticides organiques perchlorés comme methoxychlor; insecticides pyréthrinoïdes de synthèse tels que fenvalerate, abamectin ou le benzoate d'émamectine, insecticides neonicotinoide comme thiamethoxam ou l'imidaclopride, insecticides pyréthrinoïdes comme la lambda-cyhalothrine, la cyperméthrine ou la bifenthrine et insecticides oxadiazine comme indoxacarb, imidachlopryd, ou fipronil ;
- à titre des **actifs acaricides** : les propynyl sulfite acaricides tels que propargite; les acaricides triazapentadiene tels que l'amitraz, les acaricides aromatiques chlorés tels que le chlorobenzilate, ou tetradifan, et les acaricides dinitrophénol tels que binapacryle ;
- à titre des **actifs nématicides** : les nématicides carbamates, comme oxamyl ;
- à titre d'un fertilisant et/ou un produit d'engrais, les engrais à base de phosphate tels que le phosphate d'ammonium diacide (MAP), le phosphate de diammonium (DAP), l'une des un certain nombre de produits bien connus de NPK en engrais et / ou des fertilisants contenant des matériaux de l'azote tels que l'ammoniaque (anhydre ou aqueux), le nitrate d'ammonium, le sulfate d'ammonium, l'urée, les phosphates d'ammonium, le nitrate de sodium, nitrate de calcium, nitrate de potassium, nitrate de sodium, de l'urée formaldéhyde, métaux (par exemple le zinc, le fer) les phosphates d'ammonium, des matériaux de phosphore tels que les phosphates de calcium (phosphate normale et super phosphate), le phosphate d'ammonium, super-phosphate ammoniacal, l'acide phosphorique, de l'acide superphosphorique, scories de base, la roche phosphatée, du phosphate colloïdale, phosphate d'os, les matériaux de potassium tels que le chlorure de potassium, sulfate de potassium, nitrate de potassium, le phosphate de potassium, l'hydroxyde de potassium, le carbonate de potassium, des matériaux de calcium, tels que le sulfate de calcium, le carbonate de calcium, le nitrate de calcium, des matériaux de magnésium, tel que le carbonate de magnésium, oxyde de magnésium, du sulfate de magnésium , l'hydroxyde de magnésium, les matériaux du soufre tels que le sulfate d'ammonium, les sulfates d'autres engrais décrits ici, le thiosulfate d'ammonium, du soufre élémentaire (seul ou inclus dans ou appliquée sur d'autres engrais); oligoéléments ou micronutriments tels que Zn, Mn, Cu, Fe, et d'autres micronutriments discutées ici; oxydes, sulfates, chlorures, et les chélates de tels micronutriments (par exemple, l'oxyde de zinc, sulfate de zinc et le chlorure de zinc), tels chélates séquestrés sur d'autres supports tels que l'EDTA, les matériaux de bore comme l'acide borique, le borate de sodium ou le borate de calcium; et des matériaux de molybdène comme le molybdate de sodium.

Ces composés actifs agricoles peuvent exister sous forme de poudres sèches ou de liquides.

Différents types de formulations agricoles peuvent être ajoutées la formulation extemporanée visée par l'utilisation selon l'invention, en fonction des différents produits agricoles. On cite par exemple les concentrés émulsionnables (Emulsifiable Concentrates « EC »), les concentrées dispersables (Dispersable Concentrates « DC »), les suspensions concentrées (Suspensions Concentrates « SC »), les poudres mouillables (Wettable Powders « WP »), des granulés dispersables dans l'eau (Water Dispersible Granules, « WDG »). Les formulations qu'il est possible d'utiliser dépendent de la forme physique du produit agricoles (par exemple solide ou liquide), et de ses propriétés physico-chimiques en présence d'autres composés comme l'eau ou les solvants.

Selon un mode de réalisation, l'actif agricole peut être un actif soluble dans l'eau, par exemple choisi parmi :
- le glyphosate, sous la forme de son sel d'isopropylamine ou de son sel de sodium,
- le gluphosinate, sous la forme de son sel d'ammonium,
- le 2,4-D, sous la forme de ses sels d'hydroxy-2 éthylammonium, de diméthylammonium ou de tris(hydroxy-2 éthylammonium),
- le 2,4-DES, sous la forme de son sel de sodium,
- la Guazatine, sous la forme de son triacétate,
- le MCPA, sous la forme de ses sels de sodium, de potassium ou de diméthylammonium,
- le Mécoprop, sous la forme de ses sels de sodium ou de potassium,
- l'Acifluorfen, sous la forme de ses sels de sodium ou de potassium,
- le Clopyralid, sous la forme de sels d'hydroxy-2 éthylammonium ou de potassium,
- le MSMA, sous la forme de son sel de sodium,
- le Paraquat, sous la forme de son dichlorure ou de son di(méthylsulfate).

Selon un autre de ses aspects, la présente invention a pour objet l'utilisation telle que définie précédemment d'une suspension comportant :
- un milieu aqueux ;
- un sel monovalent;
- un composé sous forme de particules solides d'un diamètre compris entre 100 nm et 1 mm (de préférence entre 1-500µ, de manière encore préférée entre 5-100µ) ;
- un agent de mise en suspension consistant en un polymère comportant des groupes carboxylés, en particulier un polysaccharide comportant des groupes carboxylés.

Avantageusement, l'agent de suspension est un alginate, en particulier choisi parmi les alginates de sodium et d'ammonium.

Le sel monovalent est, en particulier, choisi parmi les sels contenants les éléments N, P, K et de préférence choisi parmi les composés suivants : sulfate de d'ammonium, polyphosphate d'ammonium, proproniate d'ammonium, nitrate d'ammonium, phosphate d'ammonium, dihydrogénophosphate d'ammonium, hexametaphosphate d'ammonium, pyrophosphate de tétrapotassium, urée, phosphate de potassium, carbonate de sodium, sulfate de potassium et leurs mélanges.
De préférence, le sel d'un cation monovalent est un sel d'ammonium, de préférence le sulfate d'ammonium.

Selon un mode d'exécution, le composé sous forme de particules solides est en particulier de type polymérique synthétique (tel que polyacrylamide ou polyvinylpyrolidone) ou naturel (tel que galactomannane, en particulier le guar et ses dérivés, en particulier le guar neutre ou natif et ses dérivés hydroxyproxylé.
L'invention va à présent être illustrée par des exemples de suspensions dont les utilisations sont conformes à l'invention.

### Exemples de réalisation :

### Exemple 1 :

### Formulation A

### Protocole :

Dans un bécher SCHOTT DURAN de 2 L (diamètre ∼12 cm, hauteur -23 cm), 1000 g de la formulation suivante sont réalisés. L'eau déionisée est mélangée au Kathon^{®} CG et au Silcolapse^{®} RG22. La solution est agitée à l'aide d'une pale défloculeuse (diamètre 80 mm) à la vitesse de 300 tour/min pendant 5 minutes. L'alginate de sodium (sous forme de poudre) est alors ajouté et la formulation est agitée de 45 minutes à 1 heure à une vitesse comprise entre 500 et 700 tour/min. Lorsque l'alginate est complètement solubilisé, le sulfate d'ammonium (sous forme de cristaux) est ajouté à 500 tour/min et l'agitation est maintenue de 45 minutes à 1 heure supplémentaire. Pour finir, le Jaguar^{®} HP-120 (sous forme de poudre) est dispersé pendant 30 minutes à 600 tour/min jusqu'à l'obtention d'une formulation homogène ne contenant plus aucune bulle.

| **Formulation A** | **Composition massique (g)** | **Pourcentage massique** | **Fournisseur** |
|---|---|---|---|
| **Eau déionisée** | 575.9 | 57.59 | - |
| **Sulfate d'ammonium** | 376.0 | 37.60 | BASF |
| **Jaguar^{®} HP-120*** | 25.0 | 2.50 | Solvay(Rhodia) |
| **Alginate de sodium** | 8.0 | 0.80 | Faravelli |
| **Silcolapse^{®} RG 22**** | 15.0 | 1.50 | Bluestar |
| **Kathon^{®} CG***** | 0.1 | 0.01 | Brenntag |
| **Total** | 1000 | 100 | |
| *Jaguar^{®} HP-120 : gomme de guar, éther 2-hydroxypropyle | | | |
| ** Silcolapse^{®} RG 22 : émulsion anti-mousse à base de silicone | | | |
| *** Kathon^{®} CG : agent conservateur à base d'isothazolinones | | | |

### Résultats :

Après stockage de cette formulation, les résultats sont présentés dans le tableau suivant :

| **Stockage** | | **7 jours à 0°C** | | **14 jours à température ambiante** | | **14jours à 54°C** | |
|---|---|---|---|---|---|---|---|
| **Séparation de phase (réf :CIPAC MT 39.3 et MT 46.3)** | | Homogène 0% | | Homogène 0% | | Homogène 0% | |
| **Viscosité (cP) à 20 tour/min et à 20°C (réf: CIPAC MT 192)** | | 1000 - 1300 | | 1000 - 1300 | | 600 - 900 | |
| **Coulabilité** | | Facilement coulable jusqu'à au moins -10°C | | | | | |
| **pH (5% dans l'eau distillée) (réf** : **CIPAC MT 191 ou MT 75.3** | | 5-7 | | | | | |
| **Densité** | | 1.225 ± 0.002 | | | | | |
| **Stabilité de la dilution (2.7% massique)** | **Temps et observations** | **Eaux CIPAC* (réf : adaptation du MT180)** | | | | | |
| | | **A** | **D** | **A** | **D** | **A** | D |
| | **0 h à 30°C** | Coule au fond - Pas de blooming - Bonne dispersion en 2 inversions | | | | | |
| | **0.5 h à 30°C** | Très bonne | | | | | |
| | **2 h à 30°C** | Bonne - Léger gradient de concentration en guar | | | | | |
| * Eaux CIPAC (Collaborate International Pesticides Analytical Council) : l'eau CIPAC A a une dureté de 20 ppm alors que celle de l'eau CIPAC D est de 342 ppm | | | | | | | |

La formulation à base d'alginate de sodium est donc parfaitement stable à toutes les températures de stockage et très facilement coulable. De plus, sa dispersion dans l'eau est aisée et bonne jusqu'à au moins 2 heures.

### Formulation Comparative C1:

### Protocole :

Lorsque la formulation de l'exemple 1 est réalisée en respectant scrupuleusement le même protocole mais en omettant l'ajout d'alginate de sodium, la composition de la formulation devient la suivante :

| **Formulation C1** | **Composition massique (g)** | **Pourcentage massique** |
|---|---|---|
| **Eau déionisée** | 575.9 | 58.06 |
| **Sulfate d'ammonium** | 376.0 | 37.90 |
| **Jaguar^{®} HP-120** | 25.0 | 2.52 |
| **Alginate de sodium** | 0 | 0 |
| **Silcolapse^{®} RG 22** | 15.0 | 1.51 |
| **Kathon^{®} CG** | 0.1 | 0.01 |
| **Total** | 992 | 100 |

### Résultats après stockage :

| **Stockage** | **30 min à température ambiante** |
|---|---|
| **Séparation de phase (réf: CIPAC MT 39.3 et MT 46.3)** | Guar majoritairement en surface sur environ 10 -20% + traces de guar au fond |

Après quelques minutes de stockage à température ambiante, une séparation de phase est observée suite à la remontée du guar en surface. De plus, de petites quantités de guar se trouvent également sur les parois du flacon de stockage, majoritairement au fond. La formulation n'est pas stable. Cette formulation n'étant pas acceptable d'un point de vue commercial, il est inutile de réaliser des tests complémentaires.

### Formulation Comparative C2 :

### Protocole :

Lorsque la formulation de l'exemple 1 est réalisée en respectant scrupuleusement le même protocole mais en remplaçant l'alginate de sodium par du Rhodopol ^{®} 23 (sous forme de poudre), la composition de la formulation devient la suivante :

| **Formulation C2** | **Composition massique (g)** | **Pourcentage massique** |
|---|---|---|
| **Eau déionisée** | 575.9 | 57.59 |
| **Sulfate d'ammonium** | 376.0 | 37.60 |
| **Jaguar^{®} HP-120** | 25.0 | 2.50 |
| **Rhodopol^{®} 23*** | 8.0 | 0.80 |
| **Silcolapse^{®} RG 22** | 15.0 | 1.50 |
| **Kathon^{®} CG** | 0.1 | 0.01 |
| **Total** | 1000 | 100 |
| *Rhodopol^{®} 23 est une gomme xanthane commercialisée par Solvay(Rhodia) | | |

### Résultats après stockage :

| **Stockage** | **30 min à température ambiante** |
|---|---|
| **Séparation de phase (réf: CIPAC MT 39.3 et MT 46.3)** | Formulation inhomogène avec présence de gros bouts de gel (gomme xanthane précipitée) qui flottent dans tout le volume + remontée de ces bouts de gel laissant environ 10% d'eau au fond du flacon |

L'ajout d'AMS conduit à une précipitation du Rhodopol^{®} 23 dans la solution. Par conséquent, le Rhodopol^{®} 23 ne joue plus son rôle d'épaississant rhéologique et la formulation n'est pas stable. La mesure de viscosité est impossible en raison de l'inhomogénéité du mélange.

Cette formulation n'étant pas acceptable d'un point de vue commercial, il est inutile de réaliser des tests complémentaires.

En conclusion, les tests ci-dessus montrent que l'ajout d'alginate de sodium a permis de stabiliser une formulation riche en sulfate d'ammonium et contenant des particules de guar. La suspension obtenue dans l'exemple 1 est homogène et ne présente pas de séparation de phase ni de précipitation

### Exemple 2

### Formulation B :

### Protocole :

Dans un bécher en Pyrex de 2L (diamètre ∼ 12,5 cm, hauteur ∼18 cm), 1700g de la formulation suivante sont réalisés. L'eau déionisée est mise en agitation à l'aide d'une pale défloculeuse de diamètre 7,7 cm à la vitesse de 180 tours/min pendant 5 minutes. L'alginate de sodium sous forme de poudre est alors ajouté et la formulation est agitée à la vitesse de 500tours/min pendant 30 minutes puis à la vitesse de 700tours/min pendant 30 minutes. Lorsque l'alginate est complètement solubilisé, le sulfate d'ammonium (sous forme de cristaux) est ajouté et le tout est agité à une vitesse de 700 tours/min pendant 25 minutes. Le Silcolapse RG22 est ensuite ajouté, la vitesse d'agitation n'est pas modifiée. Enfin, cinq minutes plus tard, le Jaguar HP-120 (sous forme de poudre) est dispersé pendant 30 minutes à une vitesse de 700 tours/min jusqu'à l'obtention d'une formulation homogène ne contenant plus aucune bulle.

| **Formulation B** | **Composition massique (g)** | **Pourcentage massique** | **Fournisseur** |
|---|---|---|---|
| **Eau déionisée** | 576.0 | 57.60 | - |
| **Sulfate d'ammonium** | 376.0 | 37.60 | Quaron |
| **Jaguar^{®} HP-120*** | 25.0 | 2.50 | Solvay(Rhodia) |
| **Alginate de sodium** | 8.0 | 0.80 | Faravelli |
| **Silcolapse^{®} RG 22**** | 15.0 | 1.50 | Bluestar |
| **Total** | 1000 | 100 | |
| *Jaguar^{®} HP-120 : gomme de guar, éther 2-hydroxypropyle | | | |
| ** Silcolapse^{®} RG 22 : émulsion anti-mousse à base de silicone | | | |

### Résultats :

Après stockage de cette formulation, les résultats sont présentés dans le tableau suivant :

| **Stockage** | | | **7 jours à 0°C** | **14 jours à température ambiante** | **14jours à 54°C** | | |
|---|---|---|---|---|---|---|---|
| **Séparation de phase (réf :CIPAC MT 39.3 et MT 46.3)** | | | Homogène 0% | Homogène 0% | Homogène 0% | | |
| **Viscosité (cP) à 20 tour/min et à 20°C (réf: CIPAC MT 192)** | | | 400 - 800 | 1500-1800 | 600 - 900 | | |
| **Coulabilité** | | Facilement coulable jusqu'à au moins -10°C | | | | | |
| **pH (5% dans l'eau distillée) (réf: CIPAC MT 191 ou MT 75.3** | | 5-7 | | | | | |
| **Densité** | | 1.23 ± 0.01 | | | | | |

| **Stockage** | | **7 jours à 0°C** | | **14 jours à température ambiante** | | **14jours à 54°C** | |
|---|---|---|---|---|---|---|---|
| **Stabilité de la dilution (2.7% massique)** | **Temps et observations** | **Eaux CIPAC* (réf: adaptation du MT180)** | | | | | |
| | | **A** | **D** | **A** | **D** | **A** | **D** |
| | **0 h à 30°C** | Coule au fond - Pas de blooming - Bonne dispersion en 2 inversions | | | | | |
| | **0.5 h à 30°C** | Très bonne | | | | | |
| | **2 h à 30°C** | Bonne - Léger gradient de concentration en guar | | | | | |
| * Eaux CIPAC (Collaborate International Pesticides Analytical Council) : l'eau CIPAC A a une dureté de 20 ppm alors que celle de l'eau CIPAC D est de 342 ppm | | | | | | | |

La formulation à base d'alginate de sodium est donc parfaitement stable à toutes les températures de stockage et très facilement coulable. De plus, sa dispersion dans l'eau est aisée et bonne jusqu'à au moins 2 heures.

### Formulations comparatives C3 et C4

| Manipulation | C3 | C4 | B |
|---|---|---|---|
| **Sulfate d'ammonium (%)** | 37,60 | 37,60 | 37,6 |
| **Alginate de sodium (%)** | **0,4** | **2,5** | **0,8** |
| **JaguarHP120(%**) | 2,5 | 2,5 | 2,5 |
| **Silcolapse RG22(%)** | 1,5 | 1,5 | 1,5 |
| **Eau épurée(%)** | 58 | 55,9 | 57,6 |

### Protocole :

**C3** : Dans un bécher en plastique VWR de 250mL (diamètre ∼ 6 cm au fond et 9,3cm en haut, hauteur ∼9 cm), 100g de la formulation suivante sont réalisés. L'eau déionisée est mise en agitation à l'aide d'une pale défloculeuse de diamètre 5,4 cm à la vitesse de 180 tours/min pendant 5 minutes. L'alginate de sodium sous forme de poudre est alors ajouté et la formulation est agitée à la vitesse de 300tours/min pendant 10 minutes. Lorsque l'alginate est complètement solubilisé, le sulfate d'ammonium (sous forme de cristaux) est ajouté et le tout est agité à une vitesse de 300 tours/min pendant 5 minutes. Le Silcolapse RG22 est ensuite ajouté, la vitesse d'agitation n'est pas modifiée. Enfin, cinq minutes plus tard, le Jaguar HP-120 (sous forme de poudre) est dispersé pendant 10 minutes à une vitesse de 450 tours/min jusqu'à l'obtention d'une formulation homogène ne contenant plus aucune bulle.

**C4** : Dans un bécher en verre borosilicate de 250mL (diamètre ∼5,8, hauteur -12 cm), 100g de la formulation suivante sont réalisés. L'eau déionisée est mise en agitation à l'aide d'une pale défloculeuse de diamètre 3,5 cm à la vitesse de 180 tours/min pendant 5 minutes. L'alginate de sodium sous forme de poudre est alors ajouté et la formulation est agitée à la vitesse de 450tours/min pendant 10 minutes puis à la vitesse de 600tours/min pendant 30 minutes. Lorsque l'alginate est complètement solubilisé, le sulfate d'ammonium (sous forme de cristaux) est ajouté et le tout est agité à une vitesse de 600 tours/min pendant 10 minutes. Le Silcolapse RG22 est ensuite ajouté, la vitesse d'agitation n'est pas modifiée. Enfin, cinq minutes plus tard, le Jaguar HP-120 (sous forme de poudre) est dispersé pendant 10 minutes à une vitesse de 600 tours/min jusqu'à l'obtention d'une formulation homogène ne contenant plus aucune bulle.

### Résultats :

**C3** : Au bout de 19 heures à température ambiante, tout le guar a sédimenté. Quelques particules sont en suspension et en surface.Au bout de 19 heures à 54°C, tout le guar a sédimenté. Quelques particules sont en suspension et en surface.

**C4** : après hydratation de l'alginate, on obtient une pâte très visqueuse qui s'écoule difficilement. Les autres composants n'étant que des solides excepté l'antimousse, la formulation devient difficile à mélanger et le résultat final est quasiment incoulable. La formulation a une viscosité supérieure à 25000 cps à température ambiante.

### Exemple 3

### Formulation C:

### Protocole :

Dans un bécher en plastique VWR de IL (diamètre ∼ 8,9cm au fond et 11,4cm en haut, hauteur ∼14,5 cm), 700g de la formulation suivante sont réalisés. L'eau déionisée est mise en agitation à l'aide d'une pale défloculeuse de diamètre 7,7 cm à la vitesse de 180 tours/min pendant 5 minutes. L'alginate de sodium sous forme de poudre est alors ajouté et la formulation est agitée à la vitesse de 450tours/min pendant 15 minutes puis à la vitesse de 600tours/min pendant 20 à 25 minutes. Lorsque l'alginate est complètement solubilisé, le sulfate d'ammonium (sous forme de cristaux) est ajouté et le tout est agité à une vitesse de 400 à 450 tours/min pendant 15 à 20 minutes. Le Silcolapse RG22 est ensuite ajouté, la vitesse d'agitation n'est pas modifiée. Cinq minutes plus tard, le tensioactif (Rhodasurf ID-5 sous forme liquide) est ajouté puis la formulation est agitée sans modifier la vitesse d'agitation. Enfin, le Jaguar HP-120 (sous forme de poudre) est dispersé pendant 10 à 20 minutes à une vitesse comprise entre 500 et 600 tours/min jusqu'à l'obtention d'une formulation homogène ne contenant plus aucune bulle.

| **Formulation C** | **Composition massique (g)** | **Pourcentage massique** | **Fournisseur** |
|---|---|---|---|
| **Eau déionisée** | 525.5 | 52.55 | - |
| **Sulfate d'ammonium** | 333.0 | 33.30 | Quaron |
| **Jaguar^{®} HP-120*** | 75.0 | 7.50 | Solvay(Rhodia) |
| **Alginate de sodium** | 6.5 | 0.65 | Faravelli |
| **Silcolapse^{®} RG 22**** | 15.0 | 1.50 | Bluestar |
| **Rhodasurf ID-5***** | 45.0 | 4.5 | Solvay(Rhodia) |
| **Total** | 1000 | 100 | |
| *Jaguar^{®} HP-120 : gomme de guar, éther 2-hydroxypropyle | | | |
| **Silcolapse^{®} RG 22 : émulsion anti-mousse à base de silicone | | | |
| ***Rhodasurf ID-5 : Alcohols, C₉₋₁₁ iso C₁₀ rich, ethoxylated | | | |

### Résultats :

Après stockage de cette formulation, les résultats sont présentés dans le tableau suivant :

| | | **Stockage** | **7 jours à 0°C** | **14 jours à température ambiante** | **14 jours à 54°C** | | |
|---|---|---|---|---|---|---|---|
| | | **Séparation de phase (réf :CIPAC MT 39.3 et MT 46.3)** | Homogène 0% | Homogène 0% | Homogène 2,5% de séparation par le bas | | |
| | | **Viscosité (cP) à 20 tour/min et à 20°C (réf: CIPAC MT 192)** | 400-700 | 2000-2400 | 1000 - 1400 | | |
| | | **Coulabilité** | Facilement coulable jusqu'à au moins -10°C | | | | |
| | | **pH (5% dans l'eau distillée) (réf: CIPAC MT 191 ou MT 75.3** | 5-7 | | | | |

| **Stockage** | | **7 jours à 0°C** | | **14 jours à température ambiante** | | **14 jours à 54°C** | |
|---|---|---|---|---|---|---|---|
| **Stabilité de la dilution (0.8% massique)** | **Temps et observations** | **Eaux CIPAC* (réf : adaptation du MT180)** | | | | | |
| | | **A** | **D** | **A** | **D** | **A** | **D** |
| | **0 h à 30°C** | Coule au fond - Pas de blooming - Tout n'est pas dispersé, quelques particules tombent au fond | | | | | |
| | **0.5 h à 30°C** | Acceptable - Gradient de concentration en guar marqué | | | | | |
| | **2 h à 30°C** | Acceptable - Gradient de concentration en guar marqué | | | | | |
| * aux CIPAC (Collaborate International Pesticides Analytical Council) : l'eau CIPAC A a une dureté de 20 ppm alors que celle de l'eau CIPAC D est de 342 ppm | | | | | | | |

### Formulation D :

### Protocole :

Dans un bécher en plastique VWR de IL (diamètre ∼ 8,9cm au fond et 11,4cm en haut, hauteur ∼14,5 cm), 700g de la formulation suivante sont réalisés. L'eau déionisée est mise en agitation à l'aide d'une pale défloculeuse de diamètre 7,7 cm à la vitesse de 180 tours/min pendant 5 minutes. L'alginate de sodium sous forme de poudre est alors ajouté et la formulation est agitée à la vitesse de 450tours/min pendant 15 minutes puis à la vitesse de 600tours/min pendant 20 à 25 minutes. Lorsque l'alginate est complètement solubilisé, le sulfate d'ammonium (sous forme de cristaux) est ajouté et le tout est agité à une vitesse de 400 à 450 tours/min pendant 15 à 20 minutes. Le Silcolapse RG22 est ensuite ajouté, la vitesse d'agitation n'est pas modifiée. Cinq minutes plus tard, le tensioactif (Mirataine D40, sous forme liquide) est ajouté puis la formulation est agitée sans modifier la vitesse d'agitation. Enfin, le Jaguar HP-120 (sous forme de poudre) est dispersé pendant 10 à 20 minutes à une vitesse comprise entre 500 et 600 tours/min jusqu'à l'obtention d'une formulation homogène ne contenant plus aucune bulle.

| **Formulation D** | **Composition massique (g)** | **Pourcentage massique** | **Fournisseur** |
|---|---|---|---|
| **Eau déionisée** | 510.5 | 51.05 | - |
| **Sulfate d'ammonium** | 333.0 | 33.30 | Quaron |
| **Jaguar^{®} HP-120*** | 75.0 | 7.50 | Solvay(Rhodia) |
| **Alginate de sodium** | 6.5 | 0.65 | Faravelli |
| **Silcolapse^{®} RG 22**** | 15.0 | 1.50 | Bluestar |
| **Mirataine D40***** | 60.0 | 6 | Solvay(Rhodia) |
| **Total** | 1000 | 100 | |
| *Jaguar^{®} HP-120 : gomme de guar, éther 2-hydroxypropyle | | | |
| **Silcolapse^{®} RG 22 : émulsion anti-mousse à base de silicone | | | |
| ***Mirataine D40 : composition aqueuse comprenant de l'eau et un alkyldimethylbetaine, dans lequel le groupe alkyle est un mélange d'environ 70% en poids de lauryl (C₁₂) et 30% en poids de tétradécyle (C₁₄), la composition ayant une teneur en alkyldimethylbetaine solide de 40% en poids. | | | |

### Résultats :

Après stockage de cette formulation, les résultats sont présentés dans le tableau suivant :

| **Stockage** | | **7 jours à 0°C** | | **14 jours à température ambiante** | | **14 jours à 54°C** | |
|---|---|---|---|---|---|---|---|
| **Séparation de phase (réf :CIPAC MT 39.3 et MT 46.3)** | | Homogène 0% | | Homogène 0% | | Homogène Traces de synérèse. | |
| **Viscosité (cP) à 20 tour/min et à 20°C (réf: CIPAC MT 192)** | | 600-900 | | 1500-1800 | | 800 - 1100 | |
| **Coulabilité** | | Facilement coulable jusqu'à au moins -10°C | | | | | |
| **pH (5% dans l'eau distillée) (réf: CIPAC MT 191 ou MT 75.3** | | 5-7 | | | | | |
| **Stabilité de la dilution (0.8% massique)** | **Temps et observations** | **Eaux CIPAC* (réf : adaptation du MT180)** | | | | | |
| | | **A** | **D** | **A** | **D** | **A** | **D** |
| | **0 h à 30°C** | Coule au fond - Pas de blooming - Bonne dispersion en 2 inversions | | | | | |
| | **0.5 h à 30°C** | Très bonne | | | | | |
| | **2 h à 30°C** | Bonne - Léger gradient de concentration en guar | | | | | |
| * Eaux CIPAC (Collaborate International Pesticides Analytical Council) : l'eau CIPAC A a une dureté de 20 ppm alors que celle de l'eau CIPAC D est de 342 ppm | | | | | | | |

### Formulation E:

### Protocole :

Dans un bécher en plastique VWR de IL (diamètre ∼ 8,9cm au fond et 11,4cm en haut, hauteur ∼14,5 cm), 700g de la formulation suivante sont réalisés. L'eau déionisée est mise en agitation à l'aide d'une pale défloculeuse de diamètre 7,7 cm à la vitesse de 180 tours/min pendant 5 minutes. L'alginate de sodium sous forme de poudre est alors ajouté et la formulation est agitée à la vitesse de 450tours/min pendant 15 minutes puis à la vitesse de 600tours/min pendant 20 à 25 minutes. Lorsque l'alginate est complètement solubilisé, le sulfate d'ammonium (sous forme de cristaux) est ajouté et le tout est agité à une vitesse de 400 à 450 tours/min pendant 15 à 20 minutes. Le Silcolapse RG22 est ensuite ajouté, la vitesse d'agitation n'est pas modifiée. Cinq minutes plus tard, le tensioactif (Geronol CF/AR-E, sous forme liquide) est ajouté puis la formulation est agitée sans modifier la vitesse d'agitation. Enfin, le Jaguar HP-120 (sous forme de poudre) est dispersé pendant 10 à 20 minutes à une vitesse comprise entre 500 et 600 tours/min jusqu'à l'obtention d'une formulation homogène ne contenant plus aucune bulle.

| **Formulation E** | **Composition massique (g)** | **Pourcentage massique** | **Fournisseur** |
|---|---|---|---|
| **Eau déionisée** | 502.0 | 50.20 | - |
| **Sulfate d'ammonium** | 376.0 | 37.60 | Quaron |
| **Jaguar^{®} HP-120*** | 40 | 4 | Solvay(Rhodia) |
| **Alginate de sodium** | 7.0 | 0.7 | Faravelli |
| **Silcolapse^{®} RG 22**** | 15.0 | 1.50 | Bluestar |
| **Geronol CF/AR-E***** | 60.0 | 6 | Solvay(Rhodia) |
| **Total** | 1000 | 100 | |
| *Jaguar^{®} HP-120 : gomme de guar, éther 2-hydroxypropyle | | | |
| **Silcolapse^{®} RG 22 : émulsion anti-mousse à base de silicone | | | |
| ***Geronol CF/AR-E : Alkylethoxyphosphate, amine salt | | | |

### Résultats :

Après stockage de cette formulation, les résultats sont présentés dans le tableau suivant :

| **Stockage** | | **7 jours à 0°C** | | **4 jours à température ambiante** | | **14 jours à 54°C** | |
|---|---|---|---|---|---|---|---|
| **Séparation de phase (réf :CIPAC MT 39.3 et MT 46.3)** | | Homogène 0% | | Homogène 0% | | Homogène 4% de séparation par le bas | |
| **Viscosité (cP) à 20 tour/min et à 20°C (réf: CIPAC MT 192)** | | 1100-1200 | | 1400-1800 | | 300-600 | |
| **Coulabilité** | | Facilement coulable jusqu'à au moins -10°C | | | | | |
| **pH (5% dans l'eau distillée) (réf: CIPAC MT 191 ou MT 75.3** | | 5-7 | | | | | |
| **Stabilité de la dilution (1,5% massique)** | **Temps et observations** | **Eaux CIPAC* (réf : adaptation du MT180)** | | | | | |
| | | **A** | **D** | **A** | **D** | **A** | **D** |
| | **0 h à 30°C** | Coule au fond - Pas de blooming - Bonne dispersion en 2 inversions | | | | | |
| | **0.5 h à 30°C** | Très bonne | | | | | |
| | **2 h à 30°C** | Très bonne | | | | | |
| * Eaux CIPAC (Collaborate International Pesticides Analytical Council) : l'eau CIPAC A a une dureté de 20 ppm alors que celle de l'eau CIPAC D est de 342 ppm | | | | | | | |

### Exemple 4

### Formulation F:

### Protocole :

Dans un bécher en plastique VWR de IL (diamètre ∼ 8,9cm au fond et 11,4cm en haut, hauteur ∼14,5 cm), 700g de la formulation suivante sont réalisés. L'eau déionisée est mise en agitation à l'aide d'une pale défloculeuse de diamètre 7,7 cm à la vitesse de 180 tours/min pendant 5 minutes. L'alginate de sodium sous forme de poudre est alors ajouté et la formulation est agitée à la vitesse de 500tours/min pendant 30 minutes. Lorsque l'alginate est complètement solubilisé, le sulfate d'ammonium (sous forme de cristaux) est ajouté et le tout est agité à une vitesse de 500 tours/min pendant 20 minutes. Le Silcolapse RG22 est ensuite ajouté, la vitesse d'agitation n'est pas modifiée. Enfin, cinq minutes plus tard, le Jaguar HP-120 (sous forme de poudre) est dispersé pendant 20 minutes à une vitesse de 600 tours/min jusqu'à l'obtention d'une formulation homogène ne contenant plus aucune bulle.

| **Formulation F** | **Composition massique (g)** | **Pourcentage massique** | **Fournisseur** |
|---|---|---|---|
| **Eau déionisée** | 527.5 | 52.75 | - |
| **Sulfate d'ammonium** | 376.0 | 37.60 | Quaron |
| **Jaguar^{®} HP-120*** | 75.0 | 7.50 | Solvay(Rhodia) |
| **Alginate de sodium** | 6.5 | 0.65 | Faravelli |
| **Silcolapse^{®} RG 22**** | 15.0 | 1.50 | Bluestar |
| **Total** | 1000 | 100 | |
| *Jaguar^{®} HP-120 : gomme de guar, éther 2-hydroxypropyle | | | |
| **Silcolapse^{®} RG 22 : émulsion anti-mousse à base de silicone | | | |

### Résultats :

Après stockage de cette formulation, les résultats sont présentés dans le tableau suivant :

| **Stockage** | | **7 jours à 0°C** | | **14 jours à température ambiante** | | **14 jours à 54°C** | |
|---|---|---|---|---|---|---|---|
| **Séparation de phase (réf :CIPAC MT 39.3 et MT 46.3)** | | Homogène 0% | | Homogène 0% | | Homogène Traces de séparation parle bas. | |
| **Viscosité (cP) à 20 tour/min et à 20°C (réf: CIPAC MT 192)** | | 400-600 | | 1500-1800 | | 600 - 900 | |
| **Coulabilité** | | Facilement coulable jusqu'à au moins -10°C | | | | | |
| **pH (5% dans l'eau distillée) (réf: CIPAC MT 191 ou MT 75.3** | | 5-7 | | | | | |
| **Stabilité de la dilution (0.8% massique)** | **Temps et observations** | **Eaux CIPAC* (réf : adaptation du MT180)** | | | | | |
| | | **A** | **D** | **A** | **D** | **A** | **D** |
| | **0 h à 30°C** | Coule au fond - Pas de blooming - Bonne dispersion en 2 inversions | | | | | |
| | **0.5 h à 30°C** | Très bonne | | | | | |
| | **2 h à 30°C** | Bonne - Léger gradient de concentration en guar | | | | | |
| * Eaux CIPAC (Collaborate International Pesticides Analytical Council) : l'eau CIPAC A a une dureté de 20 ppm alors que celle de l'eau CIPAC D est de 342 ppm | | | | | | | |

### Formulation G:

### Protocole :

Dans un bécher en plastique VWR de IL (diamètre ∼ 8,9cm au fond et 11,4cm en haut, hauteur ∼14,5 cm), 700g de la formulation suivante sont réalisés. L'eau déionisée est mise en agitation à l'aide d'une pale défloculeuse de diamètre 7,7 cm à la vitesse de 180 tours/min pendant 5 minutes. L'alginate de sodium sous forme de poudre est alors ajouté et la formulation est agitée à la vitesse de 500tours/min pendant 20 minutes puis à la vitesse de 700 tours/mn pendant 2 heures. Lorsque l'alginate est complètement solubilisé, le sulfate d'ammonium (sous forme de cristaux) est ajouté et le tout est agité à une vitesse de 700 tours/min pendant 40 minutes. Le Silcolapse RG22 est ensuite ajouté, la vitesse d'agitation est augmentée jusqu'à 500 tours/min. Enfin, cinq minutes plus tard, le Jaguar 308 NB (sous forme de poudre) est dispersé pendant 20 minutes à une vitesse de 700 tours/min jusqu'à l'obtention d'une formulation homogène ne contenant plus aucune bulle.

| **Formulation G** | **Composition massique (g)** | **Pourcentage massique** | **Fournisseur** |
|---|---|---|---|
| **Eau déionisée** | 576.0 | 57.60 | - |
| **Sulfate d'ammonium** | 376.0 | 37.60 | Quaron |
| **Jaguar^{®} 308 NB*** | 25.0 | 2.50 | Solvay(Rhodia) |
| **Alginate de sodium** | 8.0 | 0.80 | Faravelli |
| **Silcolapse^{®} RG 22**** | 15.0 | 1.50 | Bluestar |
| **Total** | 1000 | 100 | |
| *Jaguar^{®} 308 NB : gomme de guar | | | |
| **Silcolapse^{®} RG 22 : émulsion anti-mousse à base de silicone | | | |

### Résultats :

Après stockage de cette formulation, les résultats sont présentés dans le tableau suivant :

| **Stockage** | | **7 jours à 0°C** | | **14 jours à température ambiante** | | **14jours à 54°C** | |
|---|---|---|---|---|---|---|---|
| **Séparation de phase (réf :CIPAC MT 39.3 et MT 46.3)** | | Homogène 0% | | Homogène 0% | | Homogène 0% | |
| **Viscosité (cP) à 20 tour/min et à 20°C (réf: CIPAC MT 192)** | | 1000-1200 | | 2400-2800 | | 600 - 900 | |
| **pH (5% dans l'eau distillée) (réf: CIPAC MT 191 ou MT 75.3** | | 5-7 | | | | | |
| **Stabilité de la dilution (2.7% massique)** | **Temps et observations** | **Eaux CIPAC* (réf : adaptation du MT180)** | | | | | |
| | | **A** | **D** | **A** | **D** | **A** | **D** |
| | **0 h à 30°C** | Coule au fond - Pas de blooming - Bonne dispersion en 2 inversions | | | | | |
| | **0.5 h à 30°C** | Très bonne | | | | | |
| | **2 h à 30°C** | Bonne - Gradient de concentration en guar | | | | | |
| * Eaux CIPAC (Collaborate International Pesticides Analytical Council) : l'eau CIPAC A a une dureté de 20 ppm alors que celle de l'eau CIPAC D est de 342 ppm | | | | | | | |

### Formulation H

### Protocole :

Dans un bécher de 250 mL, 100g de la formulation suivante sont réalisés. L'eau déionisée est mise en agitation à l'aide d'une pale défloculeuse de diamètre 5,5 cm à la vitesse de 180 tours/min pendant 5 minutes. L'alginate de sodium sous forme de poudre est alors ajouté et la formulation est agitée à la vitesse de 500tours/min pendant 30 minutes puis à la vitesse de 700tours/min pendant 30 minutes. Lorsque l'alginate est complètement solubilisé, le sulfate d'ammonium (sous forme de cristaux) est ajouté et le tout est agité à une vitesse de 700 tours/min pendant 25 minutes. Le Silcolapse RG22 est ensuite ajouté, la vitesse d'agitation n'est pas modifiée. Enfin, cinq minutes plus tard, le Jaguar C162 (sous forme de poudre) est dispersé pendant 30 minutes à une vitesse de 700 tours/min jusqu'à l'obtention d'une formulation homogène ne contenant plus aucune bulle.

| **Formulation H** | **Composition massique (g)** | **Pourcentage massique** | **Fournisseur** |
|---|---|---|---|
| **Eau déionisée** | 57.6 | 57.60 | - |
| **Sulfate d'ammonium** | 37.6 | 37.60 | Quaron |
| **Jaguar^{®} C162*** | 2.5 | 2.50 | Solvay(Rhodia) |
| **Alginate de sodium** | 0.8 | 0.80 | Faravelli |
| **Silcolapse^{®} RG 22**** | 1.5 | 1.50 | Bluestar |
| **Total** | 100 | 100 | |
| * Jaguar^{®} C162 : hydroxypropyl guar hydroxypropyltrimonium chloride (guar cationique) | | | |
| **Silcolapse^{®} RG 22 : émulsion anti-mousse à base de silicone | | | |

### Résultats :

Après stockage de cette formulation, les résultats sont présentés dans le tableau suivant :

| **Stockage** | | **7 jours à 0°C** | | **14 jours à température ambiante** | | **14jours à 54°C** | |
|---|---|---|---|---|---|---|---|
| **Séparation de phase (réf :CIPAC MT 39.3 et MT 46.3)** | | Homogène 0% | | Homogène 0% | | Homogène 0% | |
| **Viscosité (cP) à 20 tour/min et à 20°C (réf: CIPAC MT 192)** | | 1000 - 1400 | | 1500-1900 | | 400 - 800 | |
| Coulabilité | | Facilement coulable jusqu'à au moins -5°C | | | | | |
| **pH (5% dans l'eau distillée) (réf: CIPAC MT 191 ou MT 75.3** | | 6.0 | | | | | |
| **Stabilité de la dilution (2.7% massique)** | **Temps et observations** | **Eaux CIPAC* (réf : adaptation du MT180)** | | | | | |
| | | **A** | **D** | **A** | **D** | **A** | **D** |
| | **0 h à 30°C** | Coule au fond - Pas de blooming - Bonne dispersion en 3 inversions | | | | | |
| | **0.5 h à 30°C** | Très bonne | | | | | |
| | **2 h à 30°C** | Bonne - Léger gradient de concentration en guar | | | | | |
| * Eaux CIPAC (Collaborate International Pesticides Analytical Council) : l'eau CIPAC A a une dureté de 20 ppm alors que celle de l'eau CIPAC D est de 342 ppm | | | | | | | |

### Formulation I

### Protocole :

Dans un bécher de 250 mL, 100g de la formulation suivante sont réalisés. L'eau déionisée est mise en agitation à l'aide d'une pale défloculeuse de diamètre 5,5 cm à la vitesse de 180 tours/min pendant 5 minutes. L'alginate de sodium sous forme de poudre est alors ajouté et la formulation est agitée à la vitesse de 500tours/min pendant 30 minutes puis à la vitesse de 700tours/min pendant 30 minutes. Lorsque l'alginate est complètement solubilisé, le sulfate d'ammonium (sous forme de cristaux) est ajouté et le tout est agité à une vitesse de 700 tours/min pendant 25 minutes. Le Silcolapse RG22 est ensuite ajouté, la vitesse d'agitation n'est pas modifiée. Enfin, cinq minutes plus tard, le CGEL 100 (sous forme de poudre) est dispersé pendant 30 minutes à une vitesse de 700 tours/min jusqu'à l'obtention d'une formulation homogène ne contenant plus aucune bulle. (quelques particules plus grosses moins bien dispersées).

| **Formulation I** | **Composition massique (g)** | **Pourcentage massique** | **Fournisseur** |
|---|---|---|---|
| **Eau déionisée** | 57.6 | 57.60 | - |
| **Sulfate d'ammonium** | 37.6 | 37.60 | Quaron |
| **CGEL 100*** | 2.5 | 2.50 | SNF Floerger |
| **Alginate de sodium** | 0.8 | 0.80 | Faravelli |
| **Silcolapse^{®} RG 22**** | 1.5 | 1.50 | Bluestar |
| **Total** | 100 | 100 | |
| *CGEL100 : copolymère acrylamide/acrylate de sodium ramifé | | | |
| ** Silcolapse^{®} RG 22 : émulsion anti-mousse à base de silicone | | | |

### Résultats :

Après stockage de cette formulation, les résultats sont présentés dans le tableau suivant :

| **Stockage** | | **7 jours à 0°C** | | **14 jours à température ambiante** | | **14jours à 54°C** | |
|---|---|---|---|---|---|---|---|
| **Séparation de phase (réf :CIPAC MT 39.3 et MT 46.3)** | | Homogène 0% | | Homogène 0% | | Homogène 0% | |
| **Viscosité (cP) à 20 tour/min et à 20°C (réf: CIPAC MT 192)** | | 1800 - 2200 | | 1200 - 1600 | | 1200 - 1600 | |
| **Coulabilité** | | Facilement coulable jusqu'à au moins 0°C | | | | | |
| **pH (5% dans l'eau distillée) (réf: CIPAC MT 191 ou MT 75.3** | | 5.4 | | | | | |
| **Stabilité de la dilution (2.7% massique)** | **Temps et observations** | **Eaux CIPAC* (réf : adaptation du MT180)** | | | | | |
| | | **A** | **D** | **A** | **D** | **A** | **D** |
| | **0 h à 30°C** | Coule au fond - Pas de blooming - Bonne dispersion en 2 inversions | | | | | |
| | **0.5 h à 30°C** | Très bonne | | | | | |
| | **2 h à 30°C** | Bonne - Très léger dépôt | | | | | |
| * Eaux CIPAC (Collaborate International Pesticides Analytical Council) : l'eau CIPAC A a une dureté de 20 ppm alors que celle de l'eau CIPAC D est de 342 ppm | | | | | | | |

### Formulation J

### Protocole :

Dans un bécher de 250 mL, 100g de la formulation suivante sont réalisés. L'eau déionisée est mise en agitation à l'aide d'une pale défloculeuse de diamètre 5,5 cm à la vitesse de 180 tours/min pendant 5 minutes. L'alginate de sodium sous forme de poudre est alors ajouté et la formulation est agitée à la vitesse de 500tours/min pendant 30 minutes puis à la vitesse de 700tours/min pendant 30 minutes. Lorsque l'alginate est complètement solubilisé, le sulfate d'ammonium (sous forme de cristaux) est ajouté et le tout est agité à une vitesse de 700 tours/min pendant 25 minutes. Le Silcolapse RG22 est ensuite ajouté, la vitesse d'agitation n'est pas modifiée. Enfin, cinq minutes plus tard, le CGEL 100 (sous forme de poudre) est dispersé pendant 30 minutes à une vitesse de 700 tours/min jusqu'à l'obtention d'une formulation homogène ne contenant plus aucune bulle.

| **Formulation J** | **Composition massique (g)** | **Pourcentage massique** | **Fournisseur** |
|---|---|---|---|
| **Eau déionisée** | 57.6 | 57.60 | - |
| **Sulfate d'ammonium** | 37.6 | 37.60 | Quaron |
| **Natrosol (type 250HR) *** | 2.5 | 2.50 | Ashland |
| **Alginate de sodium** | 0.8 | 0.80 | Faravelli |
| **Silcolapse^{®} RG 22**** | 1.5 | 1.50 | Bluestar |
| **Total** | 100 | 100 | |
| *Natrosol : hydroxyethylcellulose | | | |
| ** Silcolapse^{®} RG 22 : émulsion anti-mousse à base de silicone | | | |

### Résultats :

Après stockage de cette formulation, les résultats sont présentés dans le tableau suivant :

| **Stockage** | | **7 jours à 0°C** | | **14 jours à température ambiante** | | **14jours à 54°C** | |
|---|---|---|---|---|---|---|---|
| **Séparation de phase (réf :CIPAC MT 39.3 et MT 46.3)** | | Homogène 0% | | Homogène 0% | | Homogène 0% | |
| **Viscosité (cP) à 20 tour/min et à 20°C (réf: CIPAC MT 192)** | | 1200 - 1600 | | 700 - 1000 | | 350 - 650 | |
| **Coulabilité** | | Facilement coulable jusqu'à au moins -5°C | | | | | |
| **pH (5% dans l'eau distillée) (réf: CIPAC MT 191 ou MT 75.3** | | 5.5 | | | | | |
| **Stabilité de la dilution (2.7% massique)** | **Temps et observations** | **Eaux CIPAC* (réf : adaptation du MT180)** | | | | | |
| | | **A** | **D** | **A** | **D** | **A** | **D** |
| | **0 h à 30°C** | Coule au fond - Pas de blooming - Bonne dispersion en 3 inversions | | | | | |
| | **0.5 h à 30°C** | Acceptable (sous réserve d'agitation) | | | | | |
| | **2 h à 30°C** | Acceptable (sous reserve d'agitation) | | | | | |
| * Eaux CIPAC (Collaborate International Pesticides Analytical Council) : l'eau CIPAC A a une dureté de 20 ppm alors que celle de l'eau CIPAC D est de 342 ppm | | | | | | | |

### Exemple 5

### Formulation K:

### Protocole :

Dans un bécher en plastique VWR de IL (diamètre ∼ 8,9cm au fond et 11,4cm en haut, hauteur ∼14,5 cm), 500g de la formulation suivante sont réalisés. L'eau déionisée est mise en agitation à l'aide d'une pale défloculeuse de diamètre 7,7 cm à la vitesse de 180 tours/min pendant 5 minutes. L'alginate de sodium sous forme de poudre est alors ajouté et la formulation est agitée à la vitesse de 450tours/min pendant 1heure et 20 minutes. Lorsque l'alginate est complètement solubilisé, le sulfate d'ammonium (sous forme de cristaux) est ajouté et le tout est agité à une vitesse de 450 tours/min pendant 1 heure. Le Silcolapse RG22 est ensuite ajouté, la vitesse d'agitation est augmentée jusqu'à 500 tours/min. Enfin, cinq minutes plus tard, le Jaguar HP-120 (sous forme de poudre) est dispersé pendant 50 minutes à une vitesse de 500 tours/min jusqu'à l'obtention d'une formulation homogène ne contenant plus aucune bulle.

| **Formulation K** | **Composition massique (g)** | **Pourcentage massique** | **Fournisseur** |
|---|---|---|---|
| **Eau déionisée** | 558.0 | 55.80 | - |
| **Sulfate d'ammonium** | 394.0 | 39.40 | Quaron |
| **Jaguar^{®} HP-120*** | 25.0 | 2.50 | Solvay(Rhodia) |
| **Alginate de sodium** | 8.0 | 0.80 | Faravelli |
| **Silcolapse^{®} RG 22**** | 15.0 | 1.50 | Bluestar |
| **Total** | 1000 | 100 | |
| * Jaguar^{®} HP-120 : gomme de guar, éther 2-hydroxypropyle | | | |
| ** Silcolapse^{®} RG 22 : émulsion anti-mousse à base de silicone | | | |

### Résultats :

Après stockage de cette formulation, les résultats sont présentés dans le tableau suivant :

| **Stockage** | | **7 jours à 0°C** | | **14 jours à température ambiante** | | **14jours à 54°C** | |
|---|---|---|---|---|---|---|---|
| **Séparation de phase (réf :CIPAC MT 39.3 et MT 46.3)** | | Homogène 0% | | Homogène 0% | | Homogène 0% | |
| **Viscosité (cP) à 20 tour/min et à 20°C (réf : CIPAC MT 192)** | | 1300-1400 | | 1900-2100 | | 1300 - 1500 | |
| **Coulabilité** | | Facilement coulable jusqu'à au moins -10°C | | | | | |
| **pH (5% dans l'eau distillée) (réf : CIPAC MT 191 ou MT 75.3** | | 5-7 | | | | | |
| **Stabilité de la dilution (2.7% massique)** | **Temps et observations** | **Eaux CIPAC* (réf : adaptation du MT180)** | | | | | |
| | | **A** | **D** | **A** | **D** | **A D** | |
| | **0 h à 30°C** | Coule au fond - Pas de blooming - Bonne dispersion en 2 inversions | | | | | |
| | **0.5 h à 30°C** | Très bonne | | | | | |
| | **2 h à 30°C** | Bonne- Très léger gradient de concentration en guar | | | | | |
| * Eaux CIPAC (Collaborate International Pesticides Analytical Council) : l'eau CIPAC A a une dureté de 20 ppm alors que celle de l'eau CIPAC D est de 342 ppm | | | | | | | |

## Revendications

1. Utilisation d'une suspension d'un polymère comprenant, outre ledit polymère,
a) un milieu aqueux ;
b) un sel d'un cation monovalent choisi parmi les sels d'ammonium, les sels de potassium, les sels de sodium, et leurs mélanges ; et
c) un alginate
comme adjuvant extemporané d'une composition agricole destinée à être appliquée sur un champ, avec ladite suspension étant **caractérisée en ce que** :
- elle comporte de 0,01 à 5% en poids d'alginate par rapport au poids total de la suspension,
- elle comporte entre 10 à 80% en poids dudit sel d'un cation monovalent par rapport au poids total de la suspension, et
- le ratio massique entre ledit sel d'un cation monovalent et ledit polymère est compris entre 800 et 0,5

2. Utilisation selon la revendication précédente, **caractérisée en ce que** l'alginate est choisi parmi les alginates de sodium et d'ammonium.

3. Utilisation selon l'une quelconque des revendications précédentes, **caractérisée en ce que** le sel d'un cation monovalent est un sel d'ammonium choisi parmi le sulfate d'ammonium, le chlorure d'ammonium, le nitrate d'ammonium, l'acétate d'ammonium, le formate d'ammonium, l'oxalate d'ammonium, le carbonate d'ammonium, le thiosulfate d'ammonium, le phosphate d'ammonium, le thiocyanate d'ammonium, les polyphosphates d'ammonium, tel que le metaphosphate d'ammonium, l'hexametaphosphate d'ammonium, le propionate d'ammonium, le dihydrogènophosphate d'ammonium, ou leurs mélanges.

4. Utilisation selon l'une quelconque des revendications précédentes, **caractérisée en ce que** le sel d'un cation monovalent est un sel de potassium choisi parmi le pyrophosphate de tetrapotassium, le phosphate de potassium, les polyphosphates de potassium, tel que le tripolyphosphate de potassium, le chlorure de potassium, l'iodure de potassium, le sulfate de potassium, ou leurs mélanges.

5. Utilisation selon l'une quelconque des revendications précédentes, **caractérisée en ce que** le sel d'un cation monovalent est un sel de sodium choisi parmi le carbonate de sodium, le citrate de sodium, ou leurs mélanges.

6. Utilisation selon l'une quelconque des revendications précédentes, **caractérisée en ce que** le sel d'un cation monovalent est choisi parmi les composés suivants : sulfate d'ammonium, polyphosphate d'ammonium, proproniate d'ammonium, nitrate d'ammonium, phosphate d'ammonium, dihydrogénophosphate d'ammonium, hexametaphosphate d'ammonium, pyrophosphate de tétrapotassium, phosphate de potassium, carbonate de sodium, sulfate de potassium et leurs mélanges.

7. Utilisation selon l'une quelconque des revendications précédentes, **caractérisée en ce que** le sel d'un cation monovalent est le sulfate d'ammonium.

8. Utilisation selon l'une quelconque des revendications précédentes, **caractérisée en ce que** le polymère est choisi parmi le polyacrylamide ; la polyvinylpyrrolidone; les polysaccharides, par exemple choisi parmi les galactomannanes, tel que les guars, incluant les dérivés de guar, les polyfructoses tel que le levan, les amidons, incluant les dérivés d'amidon, tel que l'amylopectine et les celluloses, incluant les dérivés de cellulose, tel que la méthyl cellulose, l'éthyl cellulose, la carboxyméthyl cellulose, l'hydroxyéthyl cellulose, l'acétate de cellulose, la cellulose acétate butyrate, la cellulose acétate propionate, et leur mélanges.

9. Utilisation selon l'une quelconque des revendications précédentes, **caractérisée en ce que** ladite suspension comporte de 0,05 à 2,5% en poids d'alginate par rapport au poids total de la suspension, et de manière encore préférée de 0,1 à 1,5% en poids.

10. Utilisation selon l'une quelconque des revendications précédentes, **caractérisée en ce que** ladite suspension comporte de 20 à 60% en poids de sel d'un cation monovalent par rapport au poids total de la suspension, et de manière encore préférée de 30 à 45% en poids.

11. Utilisation selon l'une quelconque des revendications précédentes, **caractérisée en ce que** la teneur en sel d'un cation monovalent est supérieure ou égale à 31% en poids par rapport au poids total de la suspension, par exemple comprise entre 33 et 40% en poids.

12. Utilisation selon l'une quelconque des revendications précédentes, **caractérisée en ce que** le ratio massique entre le sel d'un cation monovalent et le polymère est compris entre 200 et 2, de manière encore préférée entre 100 et 4 et de manière encore plus préférée entre 30 et 7.

13. Utilisation selon l'une quelconque des revendications précédentes, **caractérisée en ce que** ladite suspension comprend :
- au moins 30% en poids, par rapport au poids total de la suspension, d'un sel d'un cation monovalent, par exemple d'un sel d'ammonium, de préférence du sulfate d'ammonium,
- au moins 1% en poids, par rapport au poids total de la suspension, du polymère,
- de 0,5 à 2% en poids, par rapport au poids total de la suspension, de l'alginate.

14. Utilisation selon l'une quelconque des revendications précédentes, **caractérisée en ce que** le polymère est un composé sous forme de particules solides d'un diamètre compris entre 100 nm et 1 mm, par exemple entre 1 et 500 µm, de préférence entre 5 et 100 µm.

## Patentansprüche

1. Verwendung einer Suspension eines Polymers, umfassend neben dem Polymer,
a) ein wässriges Medium;
b) ein Salz mit einem einwertigen Kation, ausgewählt aus Ammoniumsalzen, Kaliumsalzen, Natriumsalzen und Mischungen davon; und
c) ein Alginat,
als Zusatzstoff für Tankmischungen einer landwirtschaftlichen Zusammensetzung, die dazu bestimmt ist, auf ein Feld ausgebracht zu werden, wobei die Suspension **dadurch gekennzeichnet ist, dass**:
sie 0,01 bis 5 Gew.-% Alginat umfasst, bezogen auf das Gesamtgewicht der Suspension,
- zwischen 10 und 80 Gew.-% des Salzes mit einem einwertigen Kation umfasst, bezogen auf das Gesamtgewicht der Suspension, und
- das Masseverhältnis zwischen dem Salz mit einem einwertigen Kation und dem Polymer im Bereich zwischen 800 und 0,5 liegt.

2. Verwendung nach dem vorhergehenden Anspruch, **dadurch gekennzeichnet, dass** das Alginat ausgewählt ist aus Natrium- und Ammoniumalginaten.

3. Verwendung nach einem der vorhergehenden Ansprüche, **dadurch gekennzeichnet, dass** das Salz mit einem einwertigen Kation ein Ammoniumsalz ist, ausgewählt aus Ammoniumsulfat, Ammoniumchlorid, Ammoniumnitrat, Ammoniumacetat, Ammoniumformiat, Ammoniumoxalat, Ammoniumcarbonat, Ammoniumthiosulfat, Ammoniumphosphat, Ammoniumthiocyanat, Ammoniumpolyphosphaten, wie etwa Ammoniummetaphosphat, Ammoniumhexametaphosphat, Ammoniumpropionat, Ammoniumdihydrogenphosphat oder Mischungen davon.

4. Verwendung nach einem der vorhergehenden Ansprüche, **dadurch gekennzeichnet, dass** das Salz mit einem einwertigen Kation ein Kaliumsalz ist, ausgewählt aus Tetrakaliumpyrophosphat, Kaliumphosphat, Kaliumpolyphosphaten, wie etwa Kaliumtripolyphosphat, Kaliumchlorid, Kaliumiodid, Kaliumsulfat oder Mischungen davon.

5. Verwendung nach einem der vorhergehenden Ansprüche, **dadurch gekennzeichnet, dass** das Salz mit einem einwertigen Kation ein Natriumsalz ist, ausgewählt aus Natriumcarbonat, Natriumcitrat oder Mischungen davon.

6. Verwendung nach einem der vorhergehenden Ansprüche, **dadurch gekennzeichnet, dass** das Salz mit einem einwertigen Kation ausgewählt ist aus den folgenden Verbindungen: Ammoniumsulfat, Ammoniumpolyphosphat, Ammoniumproproniat, Ammoniumnitrat, Ammoniumphosphat, Ammoniumdihydrogenphosphat, Ammoniumhexametaphosphat, Tetrakaliumpyrophosphat, Kaliumphosphat, Natriumcarbonat, Kaliumsulfat und Mischungen davon.

7. Verwendung nach einem der vorhergehenden Ansprüche, **dadurch gekennzeichnet, dass** das Salz mit einem einwertigen Kation Ammoniumsulfat ist.

8. Verwendung nach einem der vorangehenden Ansprüche, **dadurch gekennzeichnet, dass** das Polymer ausgewählt ist aus Polyacrylamid; Polyvinylpyrrolidon; Polysacchariden, zum Beispiel ausgewählt aus Galactomannanen, wie etwa Guaren, einschließlich Guarderivaten, Polyfructosen, wie etwa Levan, Stärken, einschließlich Stärkederivaten, wie etwa Amylopectin und Cellulosen, einschließlich Cellulosederivaten, wie etwa Methylcellulose, Ethylcellulose, Carboxymethylcellulose, Hydroxyethylcellulose, Celluloseacetat, Celluloseacetatbutyrat, Celluloseacetatpropionat und Mischungen davon.

9. Verwendung nach einem der vorhergehenden Ansprüche, **dadurch gekennzeichnet, dass** die Suspension 0,05 bis 2,5 Gew.-% und noch bevorzugter 0,1 bis 1,5 Gew.-% Alginat umfasst, bezogen auf das Gesamtgewicht der Suspension.

10. Verwendung nach einem der vorhergehenden Ansprüche, **dadurch gekennzeichnet, dass** die Suspension 20 bis 60 Gew.-% und noch bevorzugter 30 bis 45 Gew.-% eines Salzes mit einem einwertigen Kation umfasst, bezogen auf das Gesamtgewicht der Suspension.

11. Verwendung nach einem der vorhergehenden Ansprüche, **dadurch gekennzeichnet, dass** der Gehalt an Salz mit einem einwertigen Kation größer oder gleich 31 Gew.-% ist, bezogen auf das Gesamtgewicht der Suspension, zum Beispiel im Bereich zwischen 33 und 40 Gew.-% liegt.

12. Verwendung nach einem der vorhergehenden Ansprüche, **dadurch gekennzeichnet, dass** das Masseverhältnis zwischen dem Salz mit einem einwertigen Kation und dem Polymer im Bereich zwischen 200 und 2, besonders bevorzugt zwischen 100 und 4 und noch stärker bevorzugt zwischen 30 und 7 liegt.

13. Verwendung nach einem der vorhergehenden Ansprüche, **dadurch gekennzeichnet, dass** die Suspension umfasst:
- mindestens 30 Gew.-%, bezogen auf das Gesamtgewicht der Suspension, eines Salzes mit einem einwertigen Kation, zum Beispiel ein Ammoniumsalz, vorzugsweise Ammoniumsulfat,
- mindestens 1 Gew.-%, bezogen auf das Gesamtgewicht der Suspension, Polymer,
- 0,5 bis 2 Gew.-%, bezogen auf das Gesamtgewicht der Suspension, Alginat.

14. Verwendung nach einem der vorhergehenden Ansprüche, **dadurch gekennzeichnet, dass** das Polymer eine Verbindung in Form von festen Teilchen mit einem Durchmesser im Bereich zwischen 100 nm und 1 mm, zum Beispiel zwischen 1 und 500 µm, vorzugsweise zwischen 5 und 100 µm ist.

## Claims

1. Use of a suspension of a polymer comprising, in addition to said polymer,
a) an aqueous medium;
b) a monovalent cation salt selected from ammonium salts, potassium salts, sodium salts, and mixtures thereof; and
c) an alginate
as extemporaneous adjuvant of an agricultural composition intended to be applied on a field, with said suspension being **characterized in that**:
- it comprises from 0.01% to 5% by weight of alginate relative to the total weight of the suspension,
- it comprises between 10% and 80% by weight of said monovalent cation salt relative to the total weight of the suspension, and
- the weight ratio between said monovalent cation salt and said polymer is between 800 and 0.5

2. Use according to the preceding claim, **characterized in that** the alginate used is chosen from sodium alginate and ammonium alginate.

3. Use according to either one of the preceding claims, **characterized in that** the monovalent cation salt is an ammonium salt selected from ammonium sulfate, ammonium chloride, ammonium nitrate, ammonium acetate, ammonium formate, ammonium oxalate, ammonium carbonate, ammonium thiosulfate, ammonium phosphate, ammonium thiocyanate, ammonium polyphosphates, such as ammonium metaphosphate, ammonium hexametaphosphate, ammonium propionate, ammonium dihydrogen phosphate, or mixtures thereof.

4. Use according to any one of the preceding claims, **characterized in that** the monovalent cation salt is a potassium salt selected from tetrapotassium pyrophosphate, potassium phosphate, potassium polyphosphates, such as potassium tripolyphosphate, potassium chloride, potassium iodide, potassium sulfate, or mixtures thereof.

5. Use according to any one of the preceding claims, **characterized in that** the monovalent cation salt is a sodium salt selected from sodium carbonate, sodium citrate, or mixtures thereof.

6. Use according to any one of the preceding claims, **characterized in that** the monovalent cation salt is selected from the following compounds: ammonium sulfate, ammonium polyphosphate, ammonium propionate, ammonium nitrate, ammonium phosphate, ammonium dihydrogen phosphate, ammonium hexametaphosphate, tetrapotassium pyrophosphate, potassium phosphate, sodium carbonate, potassium sulfate, and mixtures thereof.

7. Use according to any one of the preceding claims, **characterized in that** the monovalent cation salt is ammonium sulfate.

8. Use according to any one of the preceding claims, **characterized in that** the polymer is selected from polyacrylamide; polyvinylpyrrolidone; polysaccharides, for example selected from galactomannans, such as guars, including guar derivatives, polyfructoses such as levan, starches, including starch derivatives, such as amylopectin and celluloses, including cellulose derivatives, such as methylcellulose, ethylcellulose, carboxymethylcellulose, hydroxyethylcellulose, cellulose acetate, cellulose acetate butyrate, cellulose acetate propionate, and mixtures thereof.

9. Use according to any one of the preceding claims, **characterized in that** said suspension comprises from 0.05% to 2.5% by weight of alginate relative to the total weight of the suspension, and more preferably from 0.1% to 1.5% by weight.

10. Use according to any one of the preceding claims, **characterized in that** said suspension comprises from 20% to 60% by weight of monovalent cation salt relative to the total weight of the suspension, and more preferably from 30% to 45% by weight.

11. Use according to any one of the preceding claims, **characterized in that** the monovalent cation salt content is greater than or equal to 31% by weight relative to the total weight of the suspension, for example between 33% and 40% by weight.

12. Use according to any one of the preceding claims, **characterized in that** the weight ratio between the monovalent cation salt and the polymer is between 200 and 2, more preferably between 100 and 4 and even more preferably between 30 and 7.

13. Use according to any one of the preceding claims, **characterized in that** said suspension comprises:
- at least 30% by weight, relative to the total weight of the suspension, of a monovalent cation salt, for example of an ammonium salt, preferably of ammonium sulfate,
- at least 1% by weight, relative to the total weight of the suspension, of the polymer,
- from 0.5% to 2% by weight, relative to the total weight of the suspension, of the alginate.

14. Use according to any one of the preceding claims, **characterized in that** the polymer is a compound in the form of solid particles having a diameter of between 100 nm and 1 mm, for example between 1 and 500 µm, preferably between 5 and 100 µm.
